# EUROPEAN PATENT APPLICATION

(11) **EP 4 783 337 A1**
(43) Date of publication of application: **29.07.2026**
(21) Application number: 25772275.1
(22) Date of filing: 20.02.2025
(51) Int. Cl.: H01M 50/342, H01M 50/367, H01M 50/258, H01M 50/204, H01M 10/6556

(54) **BATTERY PACK AND DEVICE INCLUDING SAME**

(30) Priority: 13.03.2024 KR 20240035065; 26.12.2024 KR 20240197354
(71) Applicant: LG Energy Solution, Ltd., Seoul 07335 (KR)
(72) Inventor: JUNG, Seyun, Daejeon 34122 (KR); SEO, Sung Won, Daejeon 34122 (KR); KANG, Jongmo, Daejeon 34122 (KR); HWANG, Taewon, Daejeon 34122 (KR); LEE, Inje, Daejeon 34122 (KR); TANNENBERGER, Guenter, 85123 Pobenhausen (DE); HARASZTOSI, Uwe, 74172 Neckarsulm (DE); WASSERMANN, Thomas, 74321 Bietigheim-Bissingen (DE)
(74) Representative: Plasseraud IP
(86) International application number: PCT/KR2025/099482
(87) International publication number: WO 2025/193029

(57) **Abstract**

A battery pack according to one particular embodiment of the present disclosure comprises: at least one battery assembly including a plurality of battery cells; and a pack frame that stores the at least one battery assembly. The pack frame includes a bottom frame on which the battery assembly is placed and in which a venting space is provided. The battery assembly includes battery cells stacked along one direction, and cell frames that extends along edges of the battery cells and covers the edges of the battery cell. A cell vent part is formed in the part that faces the bottom frame among the cell frames.

## Description

### [TECHNICAL FIELD]

### Cross-Reference to Related Application(s)

This application claims priority to and the benefit of Korean Patent Application no. KR10-2024-0035065, filed on March 13, 2024, and Korean Patent Application no. KR10-2024-0197354, filed on December 26, 2024, the entire contents of which are incorporated herein by reference.

The present disclosure relates to a battery pack and a device including the same, and more particularly, to a battery pack that can minimize thermal runaway propagation and prevent structural collapse, and a device including the same.

### [BACKGROUND ART]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the necessity for development of the secondary battery is increasing.

Currently commercialized secondary batteries include a nickel cadmium battery, a nickel hydrogen battery, a nickel zinc battery, a lithium secondary battery, and the like. Among these batteries, the lithium secondary battery has come into the spotlight because it has advantages, for example, hardly exhibiting memory effects compared to nickel-based secondary batteries and thus being freely charged and discharged, and having very low self-discharge rate and high energy density.

Such a lithium secondary battery mainly uses lithium-based oxide and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are arranged with a separator being interposed between them, and an exterior material or a battery case which seal and store the electrode assembly together with an electrolyte.

Generally, the lithium secondary battery may be classified based on the shape of the exterior material into a can type secondary battery in which the electrode assembly is built in a metal can, and a pouch-type secondary battery in which the electrode assembly is built in a pouch of an aluminum laminate sheet.

In the case of a secondary battery used for small-sized devices, two to three battery cells are arranged, but in the case of a secondary battery used for a medium- and large-sized device such as automobiles, a battery module in which a plurality of battery cells are electrically connected is used. In such a battery module, a plurality of battery cells are connected to each other in series or parallel to form a cell assembly, thereby improving capacity and output. Further, one or more battery modules can be mounted together with various control and protection systems such as a BDU (battery disconnect unit), a BMS (battery management system), and a cooling system to form a battery pack.

A battery pack may include a battery module as a subordinate concept thereof, and the battery module may include a battery cell as a subordinate concept thereof. In addition, the number of battery cells included in the battery module or the number of battery modules included in the battery pack may be determined in various different ways according to the output or capacity of the battery pack required for an electric vehicle.

Recently, important items required for battery modules or battery packs are quick charge and thermal propagation control.

First, one of the problems of quick charge is the heat generated at quick charge. In other words, for quick charging, a cooling system is essentially required to manage the heat generated during the process to an appropriate level. Conventional battery modules uses an edge cooling structure that cools only one side (usually a lower side) of the battery cells. When quick charge is applied to a battery module with an edge cooling structure, the temperature difference between the upper and lower parts increases, and in the case of the upper part where the cooling effect is insufficient, the quick charge efficiency will inevitably decrease. Therefore, securing effective cooling performance may be very important for quick charge.

Next, with regard to thermal propagation control, when a thermal event occurs in any one battery cell among a plurality of battery cells included in the battery pack, it is necessary to block thermal propagation of this thermal event to other battery cells.

If thermal propagation between battery cells is not properly inhibited, this may lead to a thermal event in other battery cells included in the battery pack, which may cause a bigger problem, such as ignition or explosion of the battery pack. Furthermore, ignition or explosion generated in the battery pack may cause great damage to the lives or property of humans in the surrounding area. Therefore, such battery packs require a configuration that can appropriately control the above-mentioned thermal event and the propagation of this thermal event.

Taken together, there is a growing demand for a battery pack that is provided with effective cooling means for quick charge as well as means capable of inhibiting thermal propagation between battery cells.

### [DETAILED DESCRIPTION OF THE INVENTION]

### [Technical Problem]

It is an object of the present disclosure to provide a battery pack that is provided with effective cooling means for quick charge as well as means capable of inhibiting thermal propagation between battery cells, and a device including the same.

However, the technical objects to be solved by embodiments of the present disclosure are not limited to the above-described objects, and can be variously expanded within the scope of the technical idea included in the present disclosure.

### [Technical Solution]

A battery pack according to an aspect of the present disclosure comprises: at least one battery assembly including a plurality of battery cells; and a pack frame that stores the at least one battery assembly. The pack frame includes a bottom frame on which the battery assembly is placed and in which a venting space is provided. The battery assembly includes battery cells stacked along one direction, and cell frames that extends along edges of the battery cells and covers the edges of the battery cell. A cell vent part is formed in the part that faces the bottom frame among the cell frames.

The cell vent part may be located so as to correspond to the venting space.

The cell frames may include a first frame that covers the lower end part of the battery cell; a second frame that covers the upper end part of the battery cell; and third and fourth frames that cover both end parts between the lower end part and the upper end part of the battery cell, respectively. The cell vent part may be formed in the first frame.

The cell frame is provided for each of the battery cells, so that the battery cells and the cell frame may correspond to each other one-to-one.

While the venting gas is discharged from the battery cell, the cell vent part may communicate with the venting space of the bottom frame.

The cell vent part may be configured to protrude in the direction in which the bottom frame is located and be inserted into the venting space inside the bottom frame.

The battery assembly may include a cell assembly frame that stores the battery cells. The cell assembly frame may include an upper frame that covers the upper part of the battery cells; and a lower frame that covers the lower part of the battery cells.

A vent cover part that is opened at a prescribed pressure or higher may be located below the cell vent part.

The vent cover part may cover the cell vent part.

The vent cover part may be configured to protrude in a direction where the bottom frame is located and be inserted toward the venting space of the bottom frame.

The bottom frame may include an outer frame and an inner frame. The outer frame may be located below the inner frame, and the venting space may be provided by the outer frame and the inner frame.

The venting space may be provided in a plurality, and the venting gas generated in the battery cell may pass through the venting spaces in sequence.

The inner frame may include a concave part and a convex part. The venting space may include a first venting space provided in the concave part and a second venting space provided in the convex part. The inner frame may be formed with a filtration hole that connects the first venting space and the second venting space.

A venting flow path bent a plurality of times may be formed inside the convex part.

A venting device that is opened or ruptured at a prescribed pressure or higher may be provided inside the convex part.

The battery pack may comprise a heat sink having at least one cooling plate that is arranged at least at one place between the battery cells.

A coolant may flow inside the cooling plate.

The battery cells and the cooling plate may be in surface-contact with each other.

The battery pack may comprise at least one pad member that is arranged at least at one place between the battery cells.

The pack frame may include a side surface frame that extends along the edge of the bottom frame, and the side surface frame is provided with a side venting space which is communicated with the venting space. The venting gas flowing into the venting space of the bottom frame may move to the side venting space.

A device according to another aspect of the present disclosure comprises the above-mentioned battery pack.

### [Advantageous Effects]

According to particular embodiments of the present disclosure, surface cooling of the battery cells can be performed by a cell frame covering the edges of the battery cells and a cooling plate arranged between the battery cells, thereby improving cooling performance.

Also, when a thermal event occurs in a battery cell, high-temperature venting gas, particles or the like emitted from the battery cell move along a specific intended path through the cell vent provided in the cell frame. This makes it possible to minimize the propagation of a thermal event generated in a specific battery cell to other battery cells.

The effects of the present disclosure are not limited to the effects mentioned above, and additional other effects not mentioned above will be clearly understood from the description of the appended claims by those skilled in the art.

### [BRIEF DESCRIPTION OF THE DRAWINGS]

FIG. 1 is a perspective view showing a battery pack according to an embodiment of the present disclosure.
FIG. 2 is a perspective view showing a state in which a pack cover is removed in the battery pack of FIG. 1.
FIG. 3 is a perspective view showing a pack frame included in the battery pack of FIG. 1.
FIG. 4 is a perspective view showing one of the battery assemblies included in the battery pack of FIG. 1.
FIG. 5 is an exploded perspective view of the battery assembly of FIG. 4.
FIG. 6 is a perspective view showing a state in which a battery cell stack and a lower frame included in the battery assembly of FIG. 5 are coupled together.
FIG. 7 is a perspective view showing a state in which a pad member is separated from the battery cell stack and the lower frame of FIG. 6.
FIG. 8 is a perspective view showing battery cells and cell frames according to an embodiment of the present disclosure.
FIG. 9 is an exploded perspective view of the battery cells and cell frames of FIG. 8.
FIG. 10 is a perspective view showing a battery cell according to an embodiment of the present disclosure.
FIGS. 11 and 12 are cross-sectional perspective views of a battery cell coupled to a cell frame.
FIG. 13 is a perspective view showing a cell frame according to an embodiment of the present disclosure.
FIG. 14 is a perspective view showing a state in which two cell frames are coupled together.
FIGS. 15 and 16 are perspective views and front views showing a heat sink and pad members according to an embodiment of the present disclosure.
FIG. 17 is a front view showing a heat sink, pad members, and some cell frames.
FIG. 18 is an exploded perspective view showing a battery cell, cooling plate, and pad member coupled to a cell frame together.
FIG. 19 is a perspective view showing a heat sink according to an embodiment of the present disclosure.
FIG. 20 is a perspective view showing one cooling plate and cooling tube in the heat sink of FIG. 19.
FIG. 21 is a perspective view showing one of the cooling plates included in the heat sink of FIG. 19.
FIG. 22 is an exploded perspective view of the cooling plate of FIG. 21.
FIG. 23 is a front view of the heat sink of FIG. 19.
FIG. 24 is a perspective view showing a state in which the battery cell stack and the lower frame are coupled together, as viewed from below.
FIG. 25 is a perspective view of the battery cell stack as viewed from below.
FIG. 26 is a cross-sectional perspective view showing the appearance taken along the cutting line A-A of FIG. 6.
FIG. 27 is a partially enlarged diagram of the part "B" of FIG. 26.
FIG. 28 is an exploded perspective view showing the lower frame according to an embodiment of the present disclosure.
FIGS. 29(a) and (b) are respectively a perspective view and a cross-sectional perspective view showing a vent plate according to an embodiment of the present disclosure.
FIG. 30 is a perspective view showing the pack frame and battery assemblies according to an embodiment of the present disclosure.
FIG. 31 is a cross-sectional view showing the cross section taken along the cutting line D-D of FIG. 30.
FIG. 32 is a partially enlarged diagram of the part "E" of FIG. 31.
FIG. 33 is a perspective view showing a bottom frame according to an embodiment of the present disclosure.
FIG. 34 is a perspective view showing a state in which vent plates are arranged in the bottom frame of FIG. 33.
FIG. 35 is a perspective view showing an inner frame and cover plates according to an embodiment of the present disclosure.
FIG. 36 is a partially enlarged diagram of the part "F" of FIG. 35.
FIG. 37 is a perspective view showing a state in which a part of the inner frame is removed in a bottom frame according to an embodiment of the present disclosure.
FIG. 38 is a perspective view showing an outer frame and routing plates according to an embodiment of the present disclosure.
FIG. 39(a) is a partial diagram showing an outer frame hole, and FIG. 39(b) is a partial diagram showing a state in which a venting device is coupled to the outer frame hole.
FIG. 40 is a plan view showing a state in which the whole of the inner frame is removed in a bottom frame according to an embodiment of the present disclosure.
FIG. 41 is a partial cross-sectional view showing a part of a cross section of a battery pack according to a modified embodiment of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

Portions that are irrelevant to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

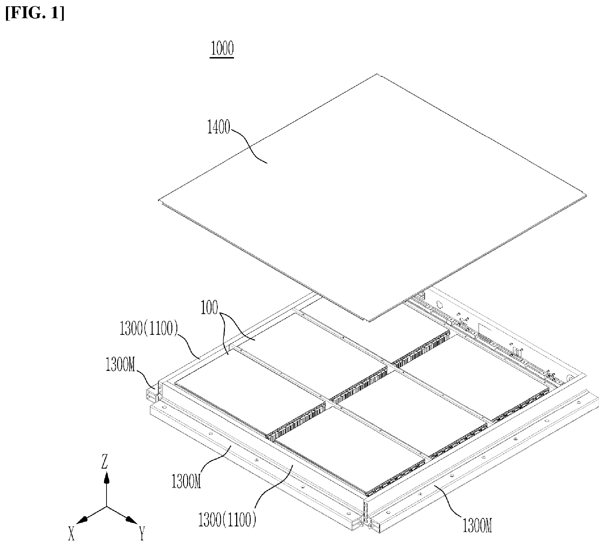

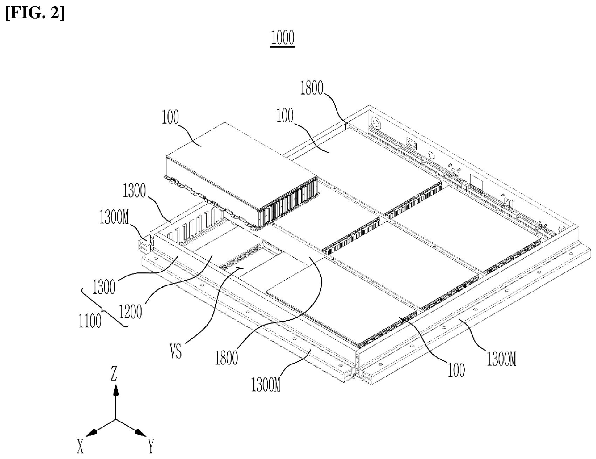

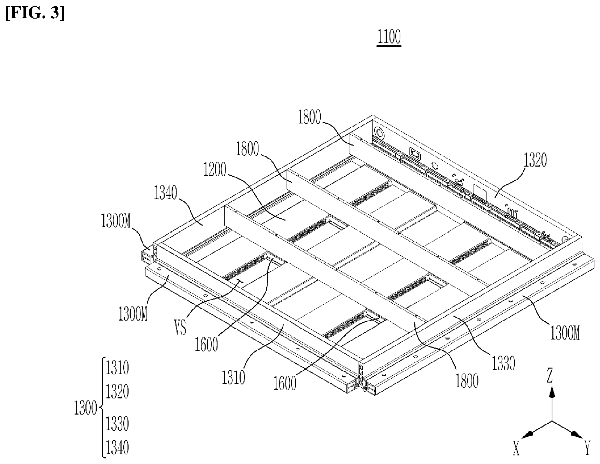

FIG. 1 is a perspective view showing a battery pack according to an embodiment of the present disclosure. FIG. 2 is a perspective view showing a state in which a pack cover is removed in the battery pack of FIG. 1. FIG. 3 is a perspective view showing a pack frame included in the battery pack of FIG. 1.

Referring to FIGS. 1 to 3, a battery pack 1000 according to one specific embodiment of the present disclosure comprises: at least one battery assembly 100 including a plurality of battery cells; and a pack frame 1100 that stores the at least one battery assembly 100. The pack frame 1100 includes a bottom frame 1200 on which the battery assembly 100 is placed and in which a venting space VS is provided. The battery assembly 100 includes battery cells stacked along one direction, and cell frames that extends along edges of the battery cells and covers the edges of the battery cells, and a cell vent part is formed in the part that faces the bottom frame 1200 among the cell frames. The cell vent part and the venting space of the bottom frame 1200 will be described later.

In particular, in the present disclosure, the cell vent part formed in the part that faces the bottom frame 1200 among the cell frame includes both the case where the cell vent part directly faces the bottom frame 1200 without any additional configuration between the cell vent part and the bottom frame 1200 and the case where an additional configuration is interposed between the cell vent part and the bottom frame 1200.

The battery assembly 100 according to this embodiment will be described below. The battery assembly according to the present disclosure refers to a single unit stored in a pack frame 1100, and other structural features are not limited as long as the battery cells are stacked in one direction while being covered by the cell frame.

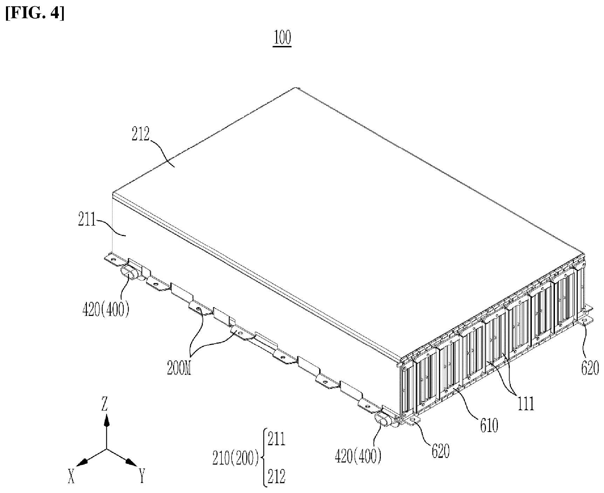

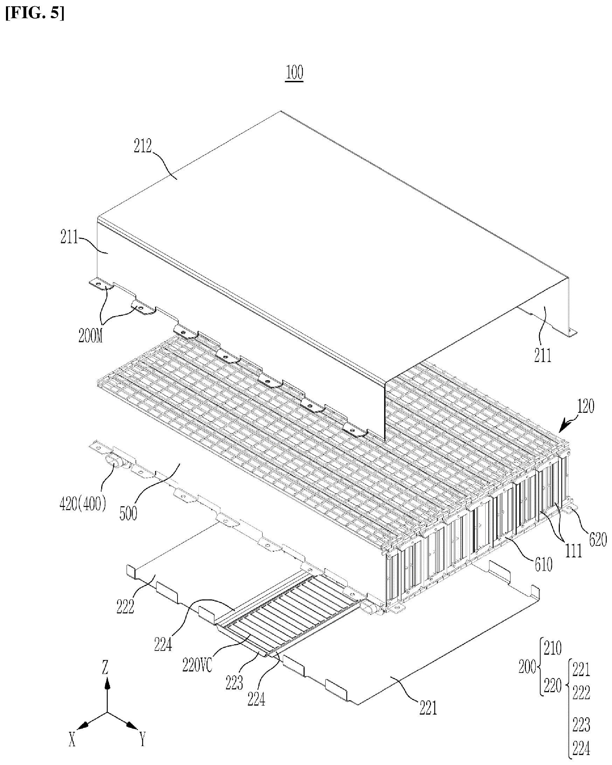

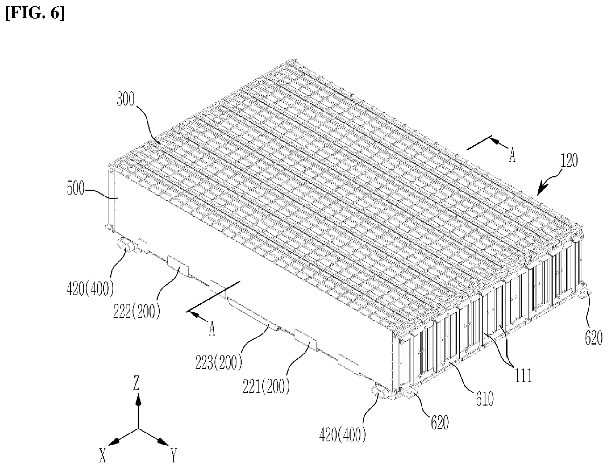

FIG. 4 is a perspective view showing one of the battery assemblies included in the battery pack of FIG. 1. FIG. 5 is an exploded perspective view of the battery assembly of FIG. 4. FIG. 6 is a perspective view showing a state in which a battery cell stack and a lower frame included in the battery assembly of FIG. 5 are coupled together.

Referring to FIGS. 4 to 6, a battery assembly 100 according to one specific embodiment of the present disclosure includes battery cells 110 stacked along one direction; and cell frames 300 that extend along the respective edges of the battery cells 110 and cover the edges of the battery cells 110.

Specifically, while the respective battery cells 110 are covered by a cell frame 300, the battery cells 110 may be stacked along one direction to form a battery cell stack 120. That is, a cell frame 300 may be provided for each of the battery cells 110, so that the battery cells 110 and the cell frames 300 may correspond to each other one-to-one. As an example, each of the battery cells 110 may be stacked along a direction parallel to the X-axis while being covered by a cell frame 300, thereby forming a battery cell stack 120. The detailed structure of the cell frame 300 will be described later.

The battery assembly 100 according to this embodiment may further include a cell assembly frame 200 that stores battery cells 110. Specifically, the cell assembly frame 200 may store battery cells 110 covered by the cell frame 300, i.e., a battery cell stack 120. The cell assembly frame 200 may include an upper frame 210 that covers the upper part of the battery cells 110; and a lower frame 220 that covers the lower part of the battery cells 110.

The upper frame 210 may include side surface parts 211 that cover both side surfaces according to the direction in which the battery cells 110 are stacked among the battery cell stack 120, and a ceiling part 212 that covers the upper surface of the battery cell stack 120. In particular, the ceiling part 212 may cover the upper part of the cell frames 300 in the battery cell stack 120. The side surface parts 211 may extend downward from both sides of the ceiling part 212 facing each other.

Meanwhile, the cell assembly frame 200 may include a mounting part 200M that is a part for fixing the battery assembly 100 to the pack frame described later. The mounting part 200M may be formed with a mounting hole, and a bolt member may pass through the mounting hole to fasten to the pack frame described later. As an example, the mounting part 200M may be provided on the side surface part 211 of the upper frame 210, and the number or size thereof is not particularly limited.

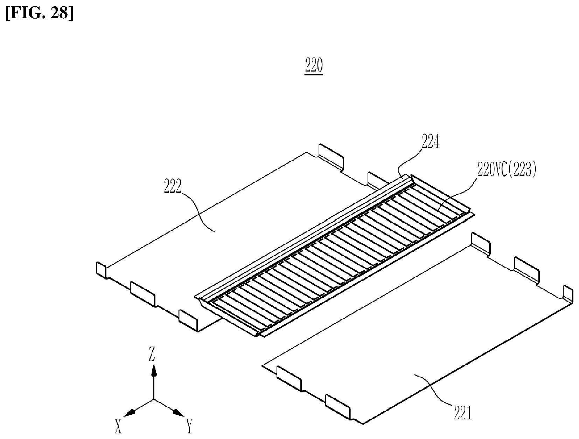

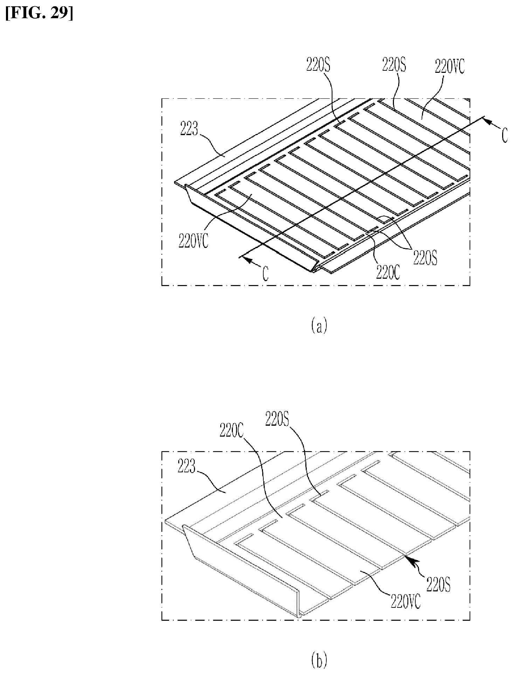

The lower frame 220 may include a first lower cover 221, a second lower cover 222, and a vent plate 223 located between the first lower cover 221 and the second lower cover 222. In addition, the lower frame 220 may further include an adhesive part 224 that joins the vent plate 223 and the battery cell stack 120. The adhesive part 224 may extend along the edge of the vent plate 223. The lower frame 220 may be coupled with the upper frame 210 to form a cell assembly frame 200, and such a cell assembly frame may cover the upper surface, lower surface, and both side surfaces of the battery cell stack 120. The first lower cover 221, the second lower cover 222, and the vent plate 223 will be described later with reference to FIGS. 28 and 29, and the like.

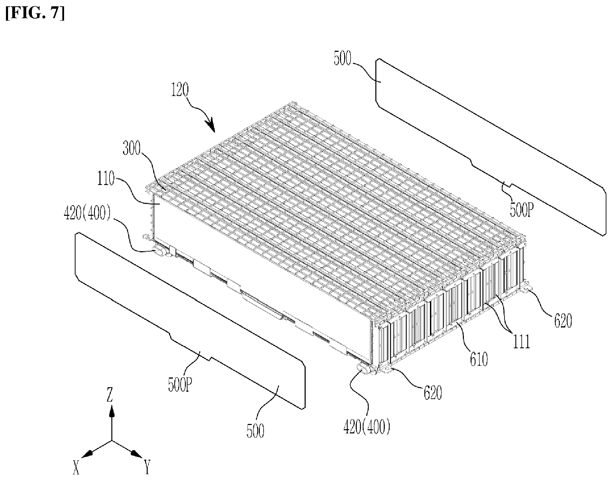

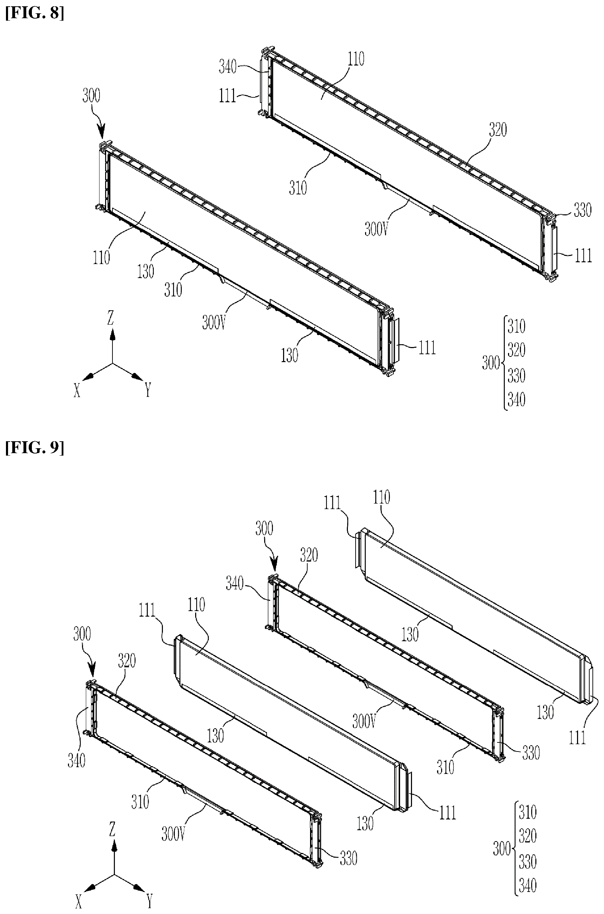

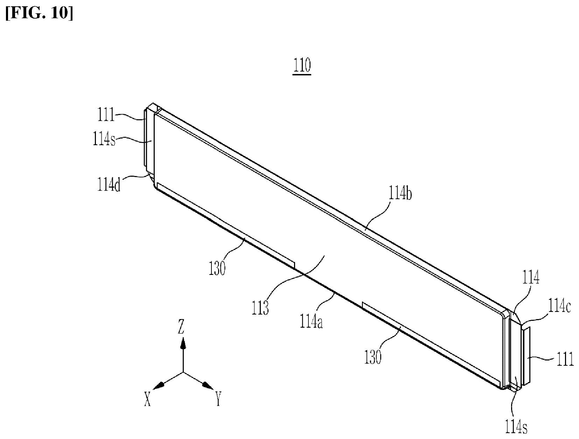

FIG. 7 is a perspective view showing a state in which a pad member is separated from the battery cell stack and the lower frame of FIG. 6. FIG. 8 is a perspective view showing battery cells and cell frames according to an embodiment of the present disclosure. FIG. 9 is an exploded perspective view of the battery cells and cell frames of FIG. 8. FIG. 10 is a perspective view showing a battery cell according to an embodiment of the present disclosure.

Referring to FIGS. 7 to 10, the battery cells 110 according to this embodiment may be various forms of battery cells, and as an example, the battery cell 110 according to this embodiment may be a pouch-type battery cell as shown in FIGS. 8 to 10. Although a pouch-type battery cell will be described below, the battery cell 110 according to this embodiment is not limited thereto, and various types of battery cells can be applied.

The battery cell 110 according to this embodiment may be configured such that an electrode assembly having electrode leads 111 protruding in one direction or both directions is stored in a pouch case 114. The battery cell 110 may have a rectangular sheet shape. The battery cell 110 may have a lower end part 114a, an upper end part 114b, and both end parts 114c, 114d.

The battery cell 110 may be formed by housing an electrode assembly in a pouch case 114 made of a laminate sheet including a resin layer and a metal layer, and then adhering the outer peripheral part of the pouch case 114. As an example, the battery cell 110 may have a structure in which two electrode leads 111 face each other and protrude from one end part 114c and the other end part 114d of the cell main body 113. As another example, a structure in which all the electrode leads 111 of the battery cells 110 protrude in one direction is also possible. One of the electrode leads 111 is a positive electrode lead, and the other is a negative electrode lead.

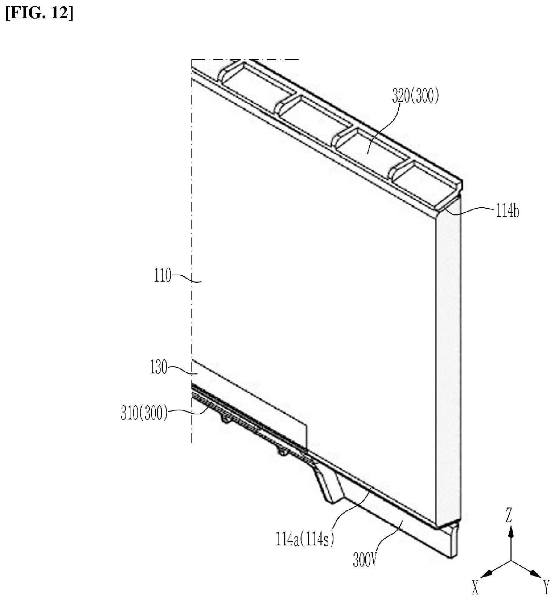

The battery cell 110 may be produced by adhering the both end parts 114c, 114d of the pouch case 114 and the lower end part 114a connecting them in a state in which the electrode assembly (not shown) is stored in the pouch case 114. In other words, the battery cell 110 according to an embodiment of the present disclosure has a total of three sealing parts 114s, wherein the sealing parts 114s have a structure that is sealed by a method such as fusion, and the remaining upper end part 114b may be composed of a folding part. That is, the battery cell 110 according to this embodiment may be a pouch-type secondary battery in which the electrode assembly is stored inside the pouch case 114 and the outer peripheral side of the pouch case 114 is sealed to form a sealing part 114s. In FIG. 10, only a state where the sealing parts 114s are formed at both end parts 114c, 114d of the pouch case 114 is shown, and no sealing parts are shown at the lower end part 114a, but the sealing part of the lower end part 114a is in a state of being folded to one side after the sealing is completed for space utilization. This will be described again in FIG. 12.

The pouch case 114 of the laminate sheet may include an inner resin layer for sealing, a metal layer for preventing penetration of materials, and an outer resin layer located on the outermost side. Based on the electrode assembly inside the pouch case 114, the inner resin layer may be located on the innermost side, the outer resin layer may be located on the outermost side, and the metal layer may be located between the inner resin layer and the outer resin layer.

The outer resin layer has excellent tensile strength and weather resistance relative to the thickness and can exhibit electrical insulation properties in order to protect the electrode assembly from the outside. Such an outer resin layer may include a polyethylene terephthalate (PET) resin or a nylon resin. The metal layer can prevent air, moisture, and the like from flowing into the inside of the pouch-type secondary battery. This metal layer may include aluminum (Al). The inner resin layers may be thermally fused to each other by heat and/or pressure applied in a state in which the electrode assembly is built in. This inner resin layer may include casted polypropylene (CPP) or polypropylene(PP).

The pouch case 114 is partitioned into two parts, and a concave-shaped storage part in which the electrode assembly can be seated may be formed in at least one of the two parts. Along the outer circumference of this storage part, the inner resin layers of the two parts of the pouch case 114 may be bonded to each other to form a sealing part 114s. In this manner, the pouch case may be sealed to prepare a battery cell 110, which is a pouch-type secondary battery.

As described above, the battery cells 110 in the battery assembly 100 may be configured in a plurality. As an example, a plurality of battery cells 110 may be stacked along one direction so as to be electrically connected to each other, thereby forming a battery cell stack 120. As an example, a plurality of battery cells 110 may be stacked along a direction parallel to the X-axis while standing upright. Thereby, the electrode leads 111 may protrude in a direction perpendicular to the direction in which the battery cells 110 are stacked. In the battery cell 110, one electrode lead 111 may protrude in the Y-axis direction, and the other electrode lead 111 may protrude in the -Y-axis direction. If the electrode leads 111 are battery cells protruding toward only one direction, the electrode leads 111 may protrude in the Y-axis direction or the -Y-axis direction.

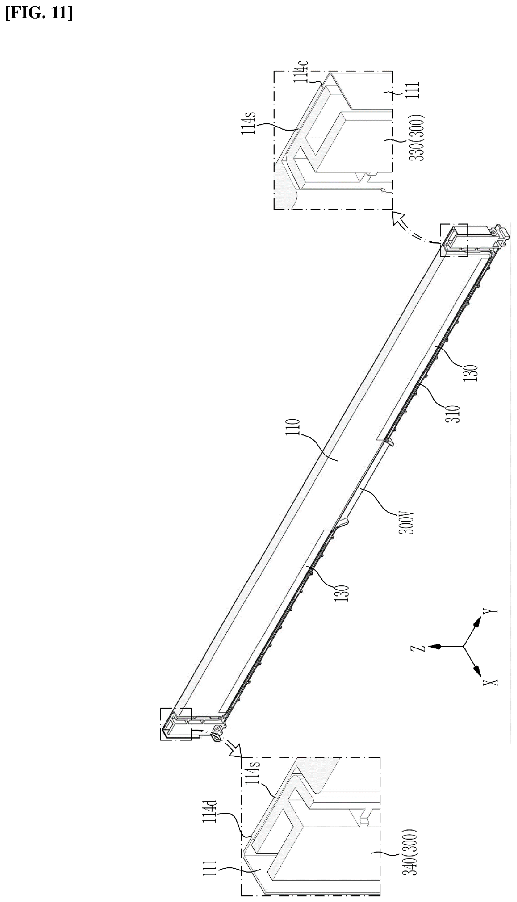

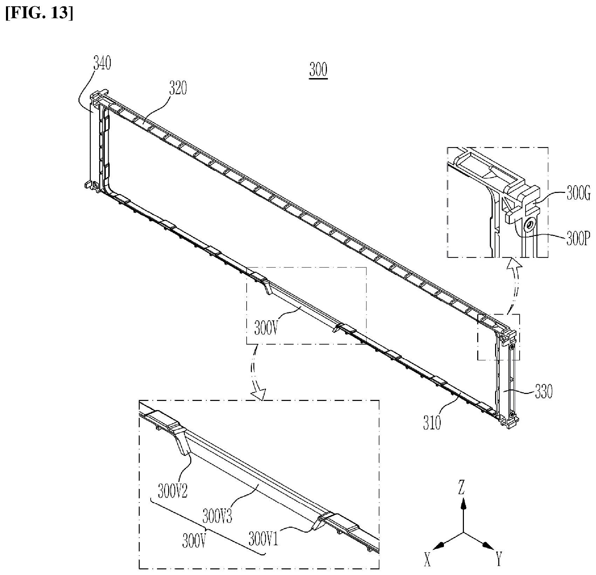

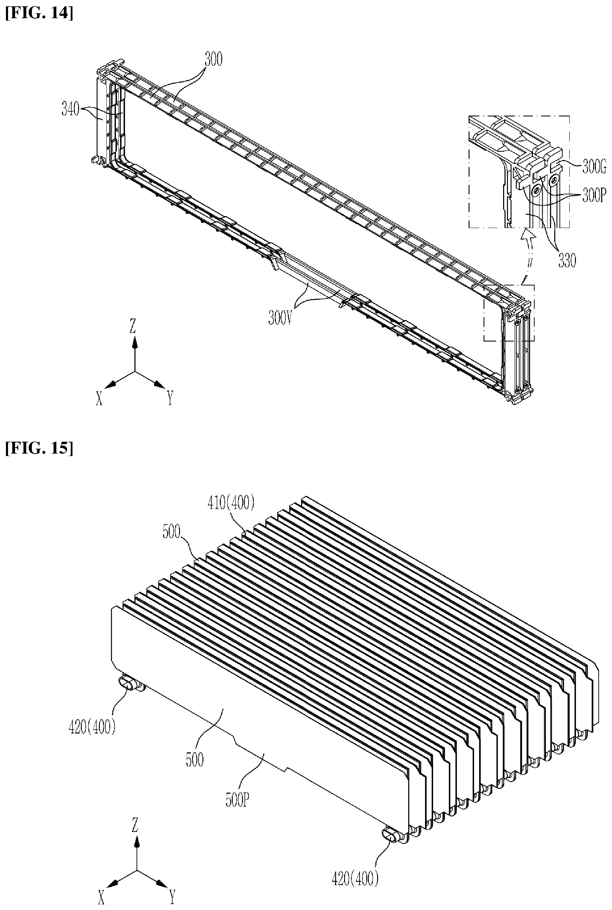

FIGS. 11 and 12 are cross-sectional perspective views of a battery cell coupled to a cell frame. Specifically, FIG. 11 is a cross-sectional perspective view of a battery cell coupled to a cell frame, which is along the xy plane, and FIG. 12 is a cross-sectional perspective view of a battery cell coupled to a cell frame, which is cut along the xz plane. FIG. 13 is a perspective view showing a cell frame according to an embodiment of the present disclosure. FIG. 14 is a perspective view showing a state in which two cell frames are coupled together.

Referring to FIGS. 2 and 8 to 14 together, the cell frame 300 according to this embodiment may extend along the edge of the battery cell 110 and cover the edge of the battery cell 110. A cell vent part 300V is formed in the part that faces the bottom frame 1200 among the cell frame 300. That is, a cell vent part 300V may be formed in the part corresponding to the lower end part 114a of the battery cell 110 among the cell frame 300.

Specifically, the cell frame 300 may include a first frame 310 that covers the lower end part 114a of the battery cells 110; a second frame 320 that covers the upper end part 114b of the battery cell 110; and a third frame 330 and a fourth frame 340 that cover both end parts 114c, 114d of the battery cell 110, respectively. As described above, while the battery cells 110 and the cell frames 300 correspond to each other one-to-one, each of the battery cells 110 may be covered by each of the cell frames 300.

The cell vent part 300V may be formed in the first frame 310 among the cell frame 300. Specifically, the cell vent part 300V may be a portion that guides discharge of high-temperature venting gas or particles generated from the battery cell 110 when a thermal event or thermal runaway occurs in any one of the battery cells 110. This cell vent part 300V may be provided in the central part among the first frame 310 for covering the lower end part 114a of the battery cell 110.

As an example, the cell vent part 300V may include a first part 300V1, a second part 300V2, and a third part 300V3. While the first part 300V1, the second part 300V2, and the third part 300V3 are being extended in a downward direction, an opened space may be formed therebetween. However, this is only one exemplary structure of the cell vent part 300V, and is sufficient if it has an opened shape and can guide the discharge of high-temperature venting gas or particles generated from the battery cell 110, and the form thereof is not particularly limited.

A portion excluding the cell vent part 300V among the first frame 310 is in close contact with the lower end part 114a of the battery cell 110, but a portion corresponding to the cell vent part 300V is perforated in a downward direction, so that high-temperature venting gas or particles generated from the battery cell 110 can be discharged in a downward direction through the cell vent part 300V. That is, the battery module according to this embodiment has a directional venting structure that discharges venting gas, particles, and the like in a preset direction through the cell frame 300 having the cell vent part 300V. In particular, since the cell vent part 300V is formed in the portion corresponding to the lower end part 114a of the battery cell 110 among the cell frame 300, a so-called "bottom vent" structure in which venting gas, particles, and the like are discharged in a downward direction can be realized. The advantages of the "bottom vent" structure will be described again below.

Meanwhile, referring to FIGS. 8 to 12, an adhesive member 130 may be attached to a portion excluding a portion corresponding to the cell vent part 300V among the lower end part 114a of the battery cell 110. As described above, the lower end part 114a of the battery cell 110 may be a sealing part 114s (see FIGS. 10 and 12) where sealing of the pouch case 114 is performed, and the upper end part 114b of the battery cell 110 may not be a portion where the sealing is performed, but may be a folding part, which is a potion where the pouch case 114 is folded. When a thermal event or thermal runaway occurs in the battery cell 110, venting gas is generated in the battery cell 110 and the internal pressure of the battery cell 110 increases. This venting gas may be discharged mainly through the sealing part 114s of the battery cell 110. That is, due to the increased internal pressure, the sealing may be released in some parts of the sealing part 114s, and the venting gas or the like may be discharged through the portion of the sealing part 114s where the sealing is released.

In the battery assembly 100 according to this embodiment, the battery cell 110 may be arranged so that the lower end part 114a of the battery cell 110 becomes the sealing part 114s and the upper end part 114b of the battery cell 110 becomes the folding part. This configuration makes it possible to more clearly realize a "bottom vent" structure in which venting gas, particles, and the like generated in the battery cell 110 is discharged in a downward direction. FIG. 12 shows a state in which the sealing part 114s corresponding to the lower end part 114a of the battery cell 110 is folded for space utilization after sealing is completed.

Meanwhile, it is preferable that the venting gas of the battery cell 110 is discharged through the cell vent part 300V of the cell frame 300 even among the downward directions. For this purpose, an adhesive member 130 may be attached to a portion excluding a portion corresponding to the cell vent part 300V among the lower end part 114a of the battery cell 110. The adhesive member 130 may be, for example, an adhesive tape.

Since the portion to which the adhesive member 130 is attached among the lower end part 114a of the battery cell 110 has its sealing degree complemented by the adhesive member 130, the sealing is not released even if the internal pressure of the battery cell 110 increases. On the other hand, a portion to which the adhesive member 130 is not attached among the lower end part 114a of the battery cell 110 has a relatively low sealing degree, so that the sealing may be released before the portion to which the adhesive member 130 is attached. Thereby, the discharge of the venting gas can be guided to a portion corresponding to the cell vent part 300V (i.e., a portion without an adhesive member) among the lower end part 114a of the battery cell 110, and the venting gas may be discharged in a downward direction through the cell vent part 300V.

Referring again to FIGS. 6, 7, 8, 13 and 14, in the battery cell stack 120 according to this embodiment, while adjacent cell frames 300 are coupled to each other, the battery cells 110 located therein can be fixed. The coupling method between the cell frames 300 is not particularly limited, but coupling due to physical binding force can be performed. For example, each cell frame 300 may include a hook protrusion 300P and a hook groove 300G. The hook protrusion 300P may protrude in the direction in which the other adjacent cell frame 300 is located. The cell frames 300 can be coupled to each other in such a way that the hook protrusion 300P of any one cell frame 300 is hook-coupled to the hook groove 300G of the adjacent cell frame 300. The state in which this hook coupling is performed between two cell frames 300 is shown in FIG. 14. While the coupling between the hook protrusion 300P and the hook groove 300G is continuously performed for each of adjacent cell frames 300, all of the plurality of cell frames 300 can be coupled.

Each battery cell 110 is covered by each cell frame 300, and these cell frames 300 are coupled to each other to form a battery cell stack 120. In this manner, the battery cell stack 120 including the cell frames 300 is structurally more stable and can withstand even external vibrations or shocks better than the form in which only the battery cells 110 are stacked together without the cell frames 300. When only the battery cells 110 are stacked together without the cell frames 300, there may be a problem in that the battery cell stack is not maintained by external vibrations or shocks and the shape collapses. Furthermore, in the case of a battery cell stack 120 including cell frames 300, since they are assembled as a unit of cell frames 300, replacement can be easily performed as a unit of cell frames 300. In other words, even after the manufacture of the battery cell stack 120 has already been completed, there is an advantage that a specific battery cell 110 in which a problem has occurred can be easily replaced by disassembling and reassembling the cell frame 300.

Next, the heat sink and pad member included in the battery assembly according to this embodiment will be described in detail.

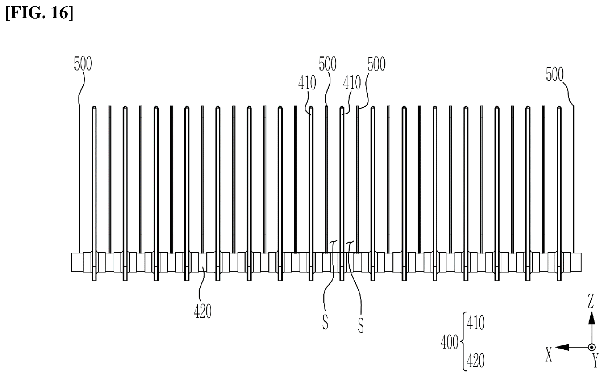

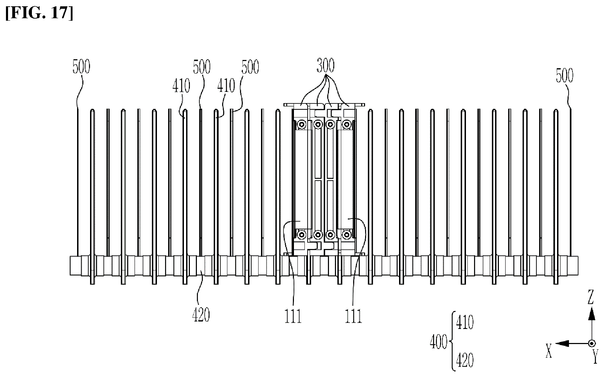

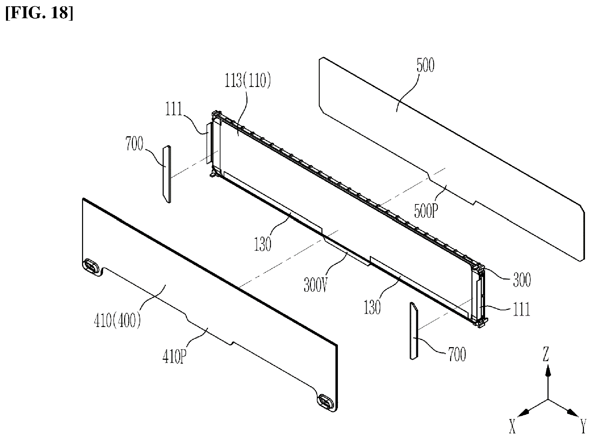

FIGS. 15 and 16 are perspective views and front views showing a heat sink and pad members according to an embodiment of the present disclosure. FIG. 17 is a front view showing a heat sink, pad members, and some cell frames. Specifically, FIG. 17 shows a state in which four cell frames 300 are interposed between cooling plates 410 of a heat sink 400 and pad members 500. FIG. 18 is an exploded perspective view showing a battery cell, cooling plate, and pad member coupled to a cell frame together.

Referring to FIGS. 15 to 18, the battery assembly 100 according to this embodiment may include a heat sink 400 having at least one cooling plate 410 arranged at least at one place between battery cells 110. A coolant may flow inside the cooling plate 410. Specifically, the cooling plate 410 has a coolant path, which is a space inside which a coolant flows, and may be in contact with the battery cell 110.

Specifically, the battery cell 110 and the cooling plate 410 may be in surface-contact with each other. At least one surface of the battery cell 110 may be in contact with the cooling plate 410. More specifically, one surface of the cooling plate 410 may be in contact with one surface of the cell main body 113 (see FIG. 10) of the battery cell 110. One surface of the battery cell 110 may be in contact with the cooling plate 410, or both surfaces of the battery cell 110 may be in contact with the cooling plate 410. That is, at least one surface of the battery cell 110 may be directly in surface-contact with the cooling plate 410.

The cooling plate 410 has a plate-like shape and can subject the battery cell 110 to surface cooling. The coolant flowing inside the cooling plate 410 may be cooling water. The battery assembly 100 according to this embodiment may have a water-cooled type cooling structure.

Conventional battery assemblies have an edge cooling structure in which a thermal resin layer is in contact only with the edge part of the battery cell, and this thermal resin layer is in direct/indirect contact with a heat sink, thereby discharging the heat of the battery cell. On the other hand, the battery assembly 100 according to this embodiment may have a surface cooling structure in which a cooling plate 410 through which a coolant flows is in contact with one surface of the cell main body 113 (see FIG. 10) of the battery cells 110 while being interposed between the battery cells 110. Since one surface of the cell main body 113 (see FIG. 10) of the battery cell 110 may be abutted on one surface of the cooling plate 410, the cooling area is much wider, which provides an advantage of superior cooling performance compared to the conventional battery module.

Recently, quick charge is required for battery assemblies as an essential item, but one of the problems of quick charge is the heat generated in quick charge. For quick charging, a cooling system is essentially required to manage the heat generated during the process to an appropriate level. When quick charge is applied to a battery assembly with a conventional edge cooling structure, the temperature difference between the upper and lower parts increases, and in the case of the upper part where the cooling effect is insufficient, the quick charge efficiency will inevitably decrease. On the other hand, in the case of the battery assembly 100 according to this embodiment, since the cooling plate 410 subjects the battery cells 110 directly to surface cooling while being in surface contact with the battery cells 110, it is possible to provide excellent cooling performance enough to control heat generation during quick charge.

The number or size of the cooling plates 410 is not particularly limited as long as surface cooling can be performed on the battery cells 110 in the battery assembly 100. The number of the cooling plates 410 may be appropriately changed in consideration of the size, capacity, heat generation, and the like of the battery pack 1000. Further, if it can cover 60% or more of the area of one surface of the battery cell 110, the area of the cooling plate 410 is not particularly limited. However, the cooling plates 410 may be provided in a plurality within the battery assembly 100, and it is preferable to secure the number of the cooling plates 410 to the extent that one surface of all the battery cells 110 can be in contact with the cooling plates 410.

Meanwhile, referring to FIG. 10, a portion of the sealing part 114s at both end parts 114c, 114d of the battery cell 110 where the electrode lead 111 protrudes from the battery cell 110 corresponds to a so-called terrace part of the battery cell 110. This terrace part is thinner in thickness than the cell main body 113 of the battery cell 110. Referring again to FIG. 18, due to the thin thickness of the terrace part, a slight gap may occur between the terrace part of the battery cell 110 and the cooling plate 410. In order to fill the gap between the terrace part of the battery cell 110 and the cooling plate 410, a spacer 700 may be further provided between the terrace part of the battery cell 110 and the cooling plate 410.

Meanwhile, referring again to FIGS. 15 to 18, the battery assembly according to this embodiment may include at least one pad member 500 located at least at one place between the battery cells 110. The pad member 500 may be a member in the form of a foam having thermal insulation properties. The material of the pad member 500 is not particularly limited as long as the pad member 500 has thermal insulation properties and prescribed elasticity. For example, the pad member 500 may include a silicone material or an aerogel material.

In one specific embodiment of the present disclosure, a cooling plate 410 or a pad member 500 may be located between the battery cells 110. Specifically, in the battery cell stack 120, the battery cells 110 are stacked while being covered by the cell frame 300, and either one of the cooling plate 410 and pad member 500 may be located between adjacent battery cells 110. More specifically, as shown in FIGS. 15 to 17, along the X-axis direction, which is a direction in which the battery cells 110 are stacked, the cooling plates 410 and pad members 500 may be alternately arranged one by one. The battery cell 110 coupled to the cell frame 300 may be interposed in the space S between the cooling plate 410 and the pad member 500 (see FIG. 16). FIG. 17 shows that each of the four cell frames 300 is interposed between the cooling plate 410 and the pad member 500. Of course, in FIG. 17, the battery cells 110 do not appear by being hidden by the cell frames 300, but the battery cells 110 are in a state of being located inside the cell frames 300.

As a result, as shown in FIG. 18, in any one of the battery cells 110, one surface of the battery cell 110 may be in contact with the cooling plate 410 of the heat sink 400, and one surface on the opposite side of the battery cell 110 may be in contact with the pad member 500. However, this is only one example, and in another embodiment of the present disclosure, cooling plates 410 can also be respectively located on all of both surfaces of the battery cell 110 without the pad member 500. The thermal propagation prevention function and swelling control function of the cooling plate 410 and the pad member 500 will be described later.

The structure of the heat sink according to this embodiment will be described in detail below.

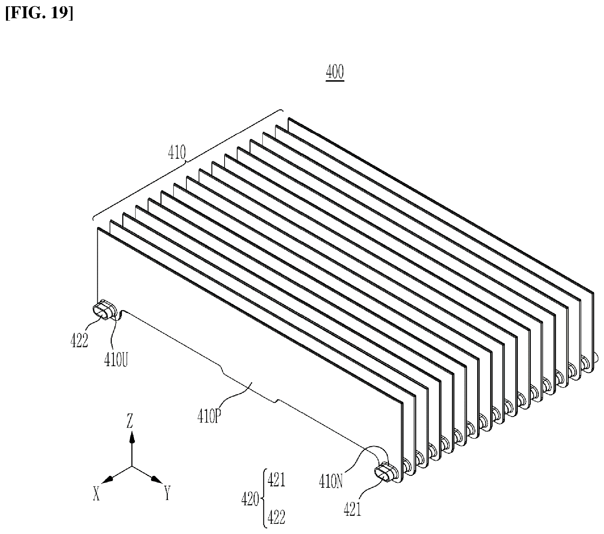

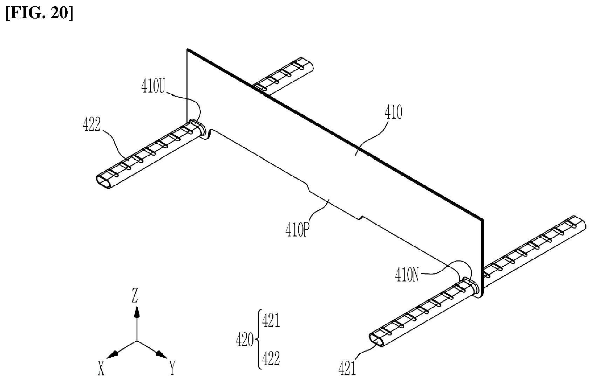

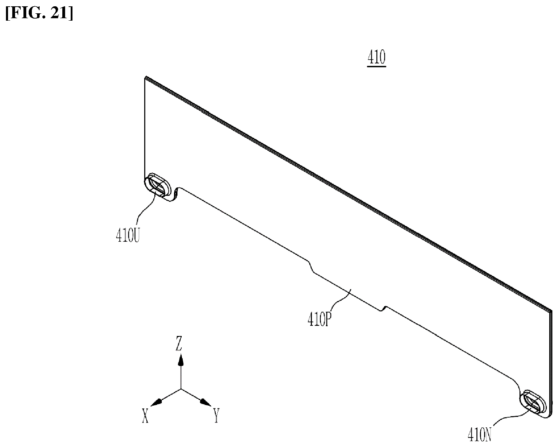

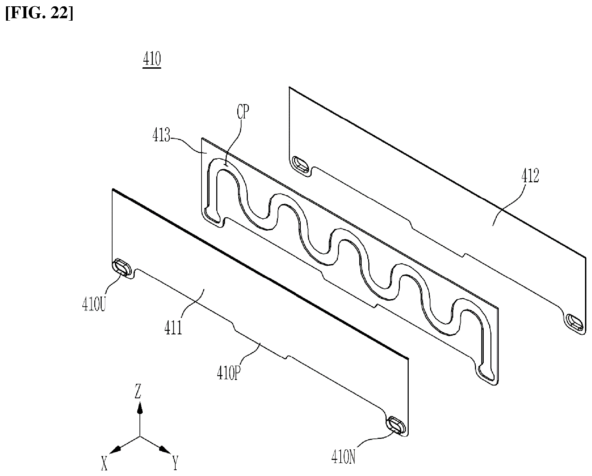

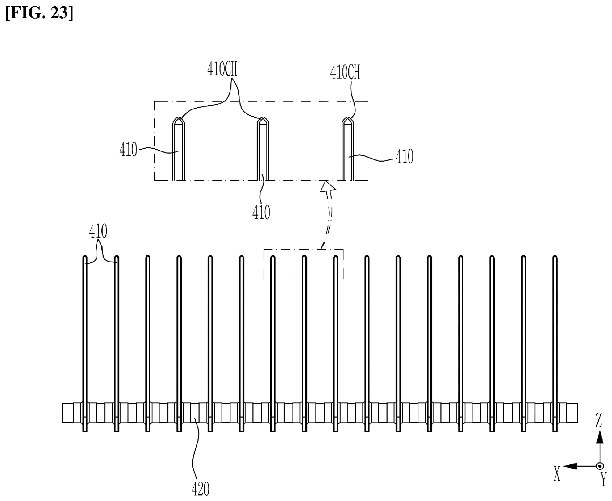

FIG. 19 is a perspective view showing a heat sink according to an embodiment of the present disclosure. FIG. 20 is a perspective view showing one cooling plate and cooling tube in the heat sink of FIG. 19. FIG. 21 is a perspective view showing one of the cooling plates included in the heat sink of FIG. 19. FIG. 22 is an exploded perspective view of the cooling plate of FIG. 21. FIG. 23 is a front view of the heat sink of FIG. 19.

Referring to FIGS. 19 to 23, the heat sink 400 according to this embodiment may include cooling plates 410 that subjects the battery cells 110 to surface cooling, and cooling tubes 420 connected to the cooling plates 410.

First, the cooling plate 410 may include a first cooling cover 411, a second cooling cover 412, and a cooling center plate 413 located between the first cooling cover 411 and the second cooling cover 412. The first cooling cover 411, the cooling center plate 413, and the second cooling cover 412 may be located in sequence along the -X-axis direction among the directions in which the battery cells 110 are stacked.

The cooling center plate 413 may be provided with a coolant path CP, which is a path through which the coolant flows. Such a coolant path CP is sealed between the first cooling cover 411 and the second cooling cover 412, thereby completing the path through which the coolant flows. As an example, FIG. 22 represents that the coolant path CP is a tortuous path, but the width, shape, area, and the like of the coolant path CP are not particularly limited as long as the coolant can flow. As another example, the coolant path CP may be realized by a single empty space. The width, shape, area, and the like of the coolant path CP may be appropriately adjusted in consideration of the flow rate, flow rate, and the like of the coolant.

The cooling plate 410 may include an inlet 410N and an outlet 410U that communicate with a coolant path CP. Each of the inlet 410N and the outlet 410U of the cooling plate 410 may be connected to a cooling tube 420. Specifically, the cooling tube 420 may include a first cooling tube 421 and a second cooling tube 422, wherein the first cooling tube 421 may be connected to the inlet 410N of the cooling plate 410, and the second cooling tube 422 may be connected to the outlet 410U of the cooling plate 410.

The first cooling tube 421 and the second cooling tube 422 may be connected to a coolant circulation system (not shown) provided inside or outside the battery pack. The coolant moving along the first cooling tube 421 from the coolant circulation system may flow into the coolant path CP through the inlet 410N of the cooling plate 410 and flow inside the cooling plate 410. Subsequently, the coolant discharged from the coolant path CP through the outlet 410U of the cooling plate 410 may flow along the second cooling tube 422 and then be collected again in the coolant circulation system. Through the above process, a coolant circulation structure may be realized within the battery assembly 100. The heat generated from the battery cells 110 inside the battery assembly 100 may be transferred to the coolant flowing into the coolant path CP of the cooling plate 410, and discharged to the outside of the battery assembly 100 along the second cooling tube 422. Subsequently, the coolant cooled again in the coolant circulation system may again flow into the coolant path CP of the cooling plate 410 via the first cooling tube 421. That is, the battery assembly 100 according to this embodiment may have a structure that discharges heat generated from the battery cells 110 via the coolant flowing along the heat sink 400.

Meanwhile, as shown in FIG. 23, a chamfered part 410CH may be provided at one end part of the cooling plate 410. The chamfered part 410CH may be a portion whose thickness gradually narrows toward the outside of the cooling plate 410 at one end of the cooling plate 410.

In a battery cell stack 120 formed by stacking battery cells 110 mounted to a cell frame 300 in one direction, a cooling plate 410 may be inserted into a gap between the battery cells 110. Since a chamfered part 410CH is provided at one end part of the cooling plate 410, the cooling plate 410 may be easily inserted between the battery cells 110 when the cooling plate 410 is assembled to the battery cell stack 120. The cooling plate 410 may start at the chamfered part 410CH and be pushed in while making close contact between the battery cells 110.

Referring again to FIGS. 5 to 9, the battery assembly 100 may further include a busbar 610 and a terminal busbar 620 connected to the electrode lead 111 of the battery cell 110. The busbar 610 and the terminal busbar 620 may be electrically connected to the electrode lead 111 of the battery cell 110. As an example, the busbar 610 and the terminal busbar 620 may be bonded to the electrode lead 111 by a welding method. The busbar 610 and the terminal busbar 620 may be arranged on both surfaces (the surface in the Y-axis direction and the surface in the -Y-axis direction) of the battery cell stack 120 that are not covered by the cell assembly frame 200.

The battery cells 110 may be electrically connected in series or in parallel via the busbar 610.

The terminal busbar 620 may be electrically connected to the electrode leads 111 of some battery cells 110, and a portion thereof may be exposed to the outside of the battery assembly 100. The battery assembly 100 may form an HV (high voltage) connection with the other battery assembly or electrical components through the terminal busbar 620. Here, the HV connection is a connection that serves as a power source to supply power that requires high voltage, and means a connection between battery cells or a connection between battery assemblies.

Meanwhile, although not specifically shown in the figure, the battery assembly 100 may include a connector. The connector (not shown) is a member for LV (low voltage) connection of the battery assembly (100). The LV connection refers to an electrical connection that requires a relatively low voltage, such as a battery electric component. As an example, a sensing member (not shown) may sense voltage data of battery cells 110 or temperature data inside the battery assembly 100, and a connector connected to the sensing member may transmit the sensed voltage data or temperature data to a BMS (Battery Management System) located outside the battery assembly 100. Therefore, a part of the connector may also be exposed to the outside of the battery assembly 100.

The functions of the cell frame 300, the cooling plate 410 of the heat sink 400, the pad member 500, and the like in the battery assembly 100 according to this embodiment will be described in more detail below.

Referring to FIGS. 8 to 22 together, since the cell frame 300 according to this embodiment extends along the edge of each of the battery cells 110 and covers the edges of the battery cells 110, one surface of the cell main body 113 of the battery cell 110 is exposed without being hidden by the cell frame 300. The cell frame 300 can stably fix the battery cells 110 and at the same time, guide that the one surface of the cell main body 113 of the battery cells 110 is in contact with the cooling plate 410 of the heat sink 400. That is, surface cooling of the battery cells 110 in the battery cell stack 120 can be realized by the cell frame 300 and the cooling plate 410. Thereby, the battery assembly 100 according to this embodiment can have excellent cooling performance enough to control heat generation during quick charge.

One surface of the cell main body 113 of the battery cell 110 is in close contact with the cooling plate 410 or the pad member 500. Thus, even if a thermal event or thermal runaway occurs in the battery cell 110, heat propagation and venting gas discharge are hardly performed in the surface direction, that is, in the X-axis or -X-axis direction, which is a direction in which the battery cells 110 are stacked. Therefore, it is highly likely that high-temperature venting gas or particles due to the thermal runaway of the battery cell 110 is discharged through the lower end part 114a, upper end part 114b or both end parts 114c, 114d of the battery cell 110. While the sealing is released at the lower end part 114a and both end parts 114c, 114d provided with the sealing part 114s, it is highly likely that high-temperature venting gas or particles are discharged. In particular, the portion of the sealing part 114s at both end parts 114c, 114d of the battery cell 110 where the electrode lead 111 protrudes is called a terrace part, however, in the conventional battery module, the sealing is mainly released at such a terrace part, and the venting gas is discharged accordingly.

However, according to this embodiment, the first to fourth frames 310, 320, 330, 340 of the cell frame 300 are in close contact with the lower end part 114a, upper end part 114b and both end parts 114c, 114d of the battery cell, respectively, so that the venting gas or particles may be restricted from being discharged through the edge of the battery cell 110. Instead, in the cell frame 300 according to this embodiment, a portion corresponding to the lower end part 114a of the battery cell, i.e., the first frame 310, is provided with a cell vent part 300V that is opened in a downward direction, so that high-temperature venting gas, particles or the like generated during thermal runaway of the battery cell 110 can be guided to be discharged only through the cell vent part 300V. That is, in the battery assembly 100 according to this embodiment, directional venting in the downward direction, i.e., "bottom vent," can be guided by the cell frame 300 provided with the cell vent part 300V. Further, as previously described, venting only to the cell vent part 300V can be more clearly realized by the adhesive member 130 attached to a portion excluding the portion corresponding to the cell vent part 300V among the lower end part 114a of the battery cell 110.

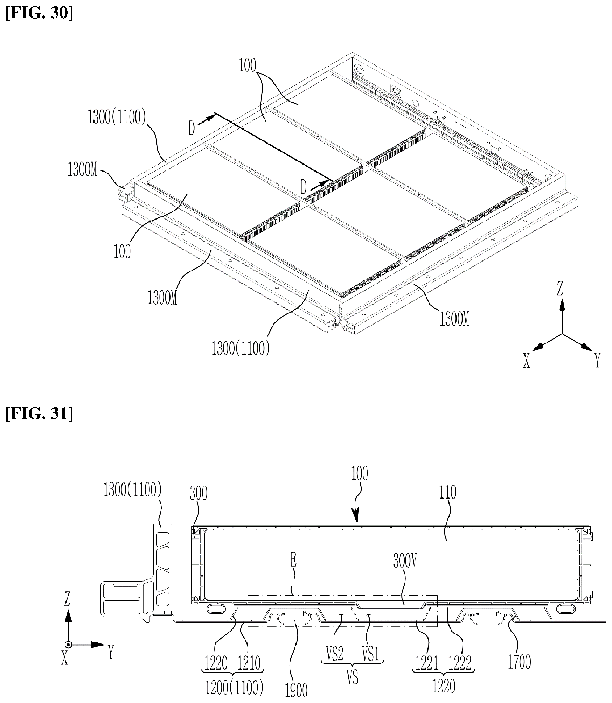

Meanwhile, although will be described later, in a state in which the battery assembly 100 is stored in the pack frame, the venting gas or particles discharged from the cell vent part 300V may be discharged to the outside of the pack frame via the inside of the bottom frame of the pack frame. This will be described in detail later with reference to FIGS. 30 to 40.

A high voltage current path, such as an HV (High voltage) connection of a busbar 610 or terminal busbar 620 exists in the battery assembly 100. Here, the HV connection is a connection that serves as a power source to supply power that requires high voltage, and means a connection between battery cells or a connection between battery assemblies. At this time, if high-temperature gas, particles or the like due to the thermal event of the battery cell 110 touch a high-voltage path such as an HV connection, a short circuit or arc discharge may occur, which may lead to additional explosion and flame generation. In particular, the terrace part is a part adjacent to the electrode lead 111, busbar 610, and the like, and the venting gas discharged through the terrace part may be even more dangerous because it directly affects the HV connection. On the other hand, in the case of the battery pack according to this embodiment, since it has a "bottom vent" structure through the cell vent part 300V as mentioned above, high-temperature gas or particles due to the thermal event may be discharged in the downward direction. In particular, as will be described later, they may be discharged to the outside through the bottom frame of the pack frame. Therefore, there is no risk that high-temperature gas, particles or the like may touch a high-voltage path such as an HV connection, ultimately improving safety against thermal runaway phenomena.

Meanwhile, as previously described, since one surface of the cell main body 113 of the battery cell 110 is in close contact with the cooling plate 410 or the pad member 500, the cooling plate 410 and the pad member 500 can minimize thermal propagation of the thermal runaway phenomenon generated in the battery cell 110 to the adjacent other battery cells 110. That is, the cooling plate 410 can realize excellent cooling performance sufficient to control heat generation during quick charge through the surface cooling structure, and at the same time, can prevent thermal propagation between the battery cells 110. In particular, the cooling plate 410 is configured to allow a coolant to flow inside, which can lower the thermal runaway temperature of the battery cell 110 and block the lateral direction, thereby being effective in preventing thermal propagation between the battery cells 110. Similarly, the pad member 500 may also prevent thermal propagation between the battery cells 110. If the pad member 500 contains a material with excellent thermal insulation properties, it can be more effective in preventing heat propagation.

Meanwhile, in the process of repeatedly charging and discharging the battery cells 110, a phenomenon where the internal electrolyte is decomposed and gas is generated so that the battery cells 110 swell up, that is, a swelling phenomenon, may occur. In the swelling phenomenon of the battery cells 110, the battery cells 110 expand in the thickness direction. That is, the battery cells 110 can expand along the direction in which the battery cells 110 are stacked (the direction parallel to the X-axis). The pad member 500 according to this embodiment can control the swelling while absorbing the swelling of the battery cells 110. This makes it possible to prevent the battery assembly 100 from being deformed beyond its deformation limit due to the swelling of the battery cells 110. The cooling plate 410 that is in contact with the other surface of the battery cell 110 can also absorb swelling of the battery cell 110 to some extent.

The vent plate and the vent cover part according to an embodiment of the present invention will be described in detail below.

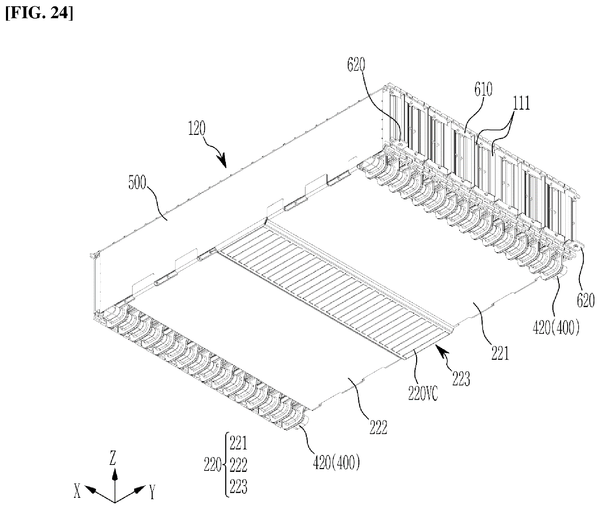

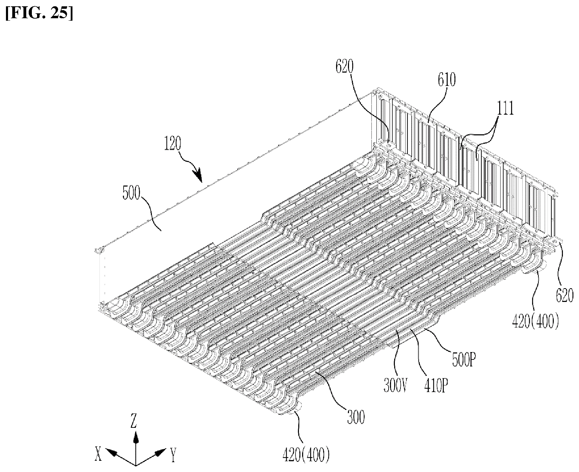

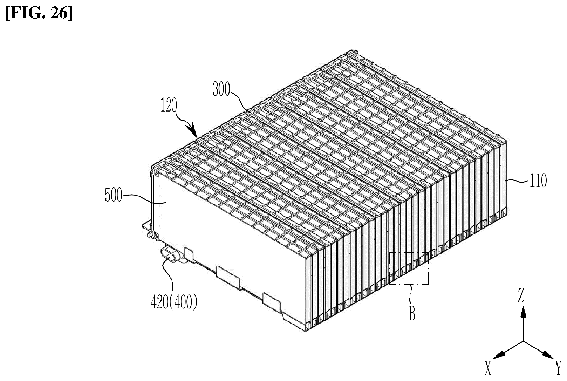

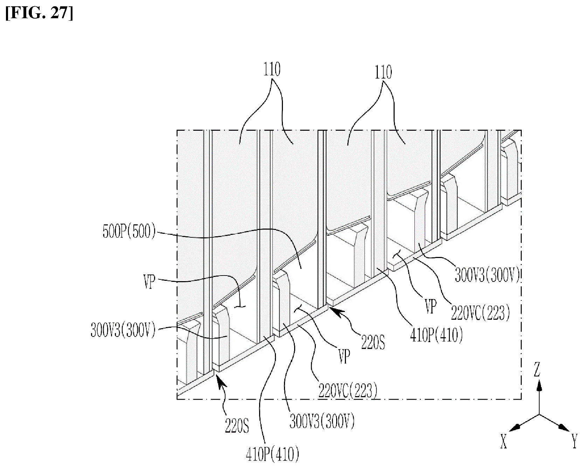

FIG. 24 is a perspective view showing a state in which the battery cell stack and the lower frame are coupled together, as viewed from below. FIG. 25 is a perspective view of the battery cell stack as viewed from below. FIG. 26 is a cross-sectional perspective view showing the appearance taken along the cutting line A-A of FIG. 6. FIG. 27 is a partially enlarged diagram of the part "B" of FIG. 26. FIG. 28 is an exploded perspective view showing the lower frame according to an embodiment of the present disclosure. FIGS. 29(a) and (b) are respectively a perspective view and a cross-sectional perspective view showing a vent plate according to an embodiment of the present disclosure. In particular, FIG. 29(b) shows an appearance taken along the cutting line C-C in FIG. 29(a).

Referring to FIGS. 5, 6, and 24 to 29, as described above, the battery assembly 100 according to this embodiment may include a cell assembly frame 200 that houses battery cells 110, wherein the cell assembly frame 200 may include an upper frame 210 that covers the upper part of the battery cells 110; and a lower frame 220 that covers the lower part of the battery cells 110.

A vent cover part 220VC that is opened at a prescribed pressure or higher may be located below the cell vent part 300V. As an example, a vent cover part 220VC that is opened at a prescribed pressure or higher may be formed on a lower frame 220. As an example, the lower frame 220 may include a first lower cover 221, a second lower cover 222, and a vent plate 223 located between the first lower cover 221 and the second lower cover 222.

A first lower cover 221, a vent plate 223, and a second lower cover 222 may be arranged in sequence along a direction from one end 114d to the other end 114c of the battery cell 110. That is, the vent plate 223 may be located at a position corresponding to the cell vent part 300V of the cell frame 300, and a vent cover part 220VC may be provided on this vent plate 223.

The vent cover part 220VC may cover the cell vent part 300V of the cell frame 300. Specifically, the vent cover part 220VC may cover the lower part of the cell vent part 300V of the cell frame 300. The vent plate 223 including the vent cover part 220VC may include a fire-resistant material. As an example, the vent plate 223 may include a MICA material.

The vent cover part 220VC may be a structure that is opened when a prescribed pressure or higher is applied by the venting gas discharged through the cell vent part 300V. If this function is exhibited, the structure of the vent cover part 220VC is not particularly limited, and the standard of the pressure to be opened is also not particularly limited. The standard of the pressure to be opened may vary depending on the number, size, and components of the battery cells included in the battery assembly.

As an example, the vent cover part 220VC according to this embodiment may include a connecting part 220C which is a portion connected to the vent plate 223, and a slit 220S having a perforated shape may be formed on the remaining three sides excluding the connecting part 220C. That is, a slit 220S is formed on the remaining three sides of the vent plate 223 excluding the connecting part 220C, so that a vent cover part 220VC may be provided on the vent plate 223. The number of vent cover parts 220VC provided on the vent plate 223 is not particularly limited, but as an example, the number of vent cover parts 220VC may be the same as the number of cell vent parts 300V in the battery cell stack 120, and each of the vent cover parts 220VC may correspond one-to-one with each of the cell vent parts 300V.

At a normal time, this vent cover part 220VC covers the lower part of the cell vent part 300V, however, when venting gas is discharged from the battery cell 110 and a prescribed pressure or higher is applied to the vent cover part 220VC, the vent cover part 220VC may be opened while the vent cover part 220VC is bent in the opposite direction to the direction in which the cell vent part 300V is located. Thereby, the venting gas generated in the battery cell may be discharged through the cell vent part 300V and the vent cover part 220VC.

Meanwhile, the lower frame 220 may include an adhesive part 224 that joins the vent plate 223 and the battery cell stack 120. This adhesive part 224 may extend along the edge of the vent plate 223. More specifically, an adhesive part 224 may be provided at the edge of the vent plate 223, and the vent plate 223 may be attached to the lower end part of the cell frame 300, i.e., the first frame 310 of the cell frame 300 via the adhesive part 224. Since the adhesive part 224 is attached to the edge of the vent plate 223, the venting gas or particles discharged from the cell vent part 300V may be prevented from being leaked to the part other than the vent cover part 220VC.

Furthermore, referring to FIGS. 13, 15, 18, 19 and 27, the cooling plate 410 according to this embodiment may include a cooling plate protrusion 410P in the shape of protruding so as to correspond to the cell vent part 300V of the cell frame 300. The cooling plate protrusion 410P may protrude downward so as to face the cell vent part 300V at the lower side of the cooling plate 410.

In addition, the pad member 500 may include a pad member protrusion 500P in the shape of protruding so as to correspond to the cell vent part 300V of the cell frame 300. The pad member protrusion 500P may protrude downward so as to face the cell vent part 300V at the lower side of the pad member 500.

As shown in FIG. 13, the cell vent part 300V may include a first part 300V1, a second part 300V2, and a third part 300V3, wherein the portion facing the third part 300V3 may be opened without any other member.

In this case, a cooling plate 410 or a pad member 500 may be located between the battery cells 110, and a cooling plate protrusion 410P or a pad member protrusion 500P may be located on a portion facing the third part 300V3 of the cell vent part 300V.

Specifically, as shown in FIG. 27, a pad member protrusion 500P may be located on the opposite side of the third part 300V3 of one cell vent part 300V, and a cooling plate protrusion 410P may be located on the opposite side of the third part 300V3 of the other adjacent cell vent part 300V.

While the first part 300V1 and the second part 300V2 of the cell vent part 300V are in contact with either one of the cooling plate protrusion 410P and the pad member protrusion 500P, a path for venting can be formed in the cell vent part 300V. That is, the space surrounded by the first part 300V1, the second part 300V2, the third part 300V3, and the cooling plate protrusion 410P or the pad member protrusion 500P can become a venting path VP (see FIG. 27) through which the venting gas passes. In addition, the lower part of the venting path VP can be blocked by the vent cover part 220VC of the vent plate 223. In a normal time, the venting path VP is blocked by the vent cover part 220VC, however, when a prescribed pressure or higher is applied to the vent cover part 220VC, the venting path VP may be opened while the vent cover part 220VC is bent downward. The venting gas generated from the battery cell 110 may be discharged downward through the venting path VP of the cell vent part 300V.

Meanwhile, referring again to FIG. 5, the upper frame 210 of the cell assembly frame 200 may include side surface parts 211 and a ceiling part 212 that cover the battery cell stack 120. Such an upper frame 210 can protect the battery cell stack 120 and also control swelling of the battery cells 110. In addition, although the cell vent part 300V is provided in the cell frame 300, there may be venting gas leaking to other parts between the cell frames 300, however, the upper frame 210 may block the leaked venting gas from spreading to the outside of the battery assembly 100.

Referring again to FIGS. 1 to 3, the bottom frame 1200 on which the battery assembly 100 is placed is provided with a venting space. The venting space will be described in more detail in conjunction with other drawings. FIGS. 1 and 2 illustrate a battery pack 1000 under the state in which six battery assemblies 100 are placed on the bottom frame 1200.

The pack frame 1100 may include a side surface frame 1300 that extends along the edge of the bottom frame 1200. As an example, the side surface frame 1300 may include a first side surface frame 1310, a second side surface frame 1320, a third side surface frame 1330, and a fourth side surface frame 1340. The first side surface frame 1310, the second side surface frame 1320, the third side surface frame 1330, and the fourth side surface frame 1340 may be arranged along the four sides of the edge of the bottom frame 1200 having a square shape. A storage space with an opened upper part is provided by the bottom frame 1200 and the side surface frame 1300, and a battery assembly 100 may be arranged in this storage space. After the battery assembly 100 is arranged in the storage space, the opened upper part of the storage space can be covered by the pack cover 1400. The pack cover 1400 can be joined to the side surface frame 1300 of the pack frame 1100, and as an example, weld bonding or joining using an adhesive may be applied. The battery assembly 100 may be sealed by the pack frame 1100 and the pack cover 1400. In addition, a gasket for increasing sealing properties may be interposed between the pack cover 1400 and the side surface frame 1300.

Meanwhile, the battery pack 1000 according to this embodiment may include a mounting beam 1300M provided on a side surface frame 1300 to fix the battery pack 1000. As an example, the mounting beams 1300M formed on the side surface frame 1300 are shown in FIGS. 1 to 3. The mounting beam 1300M may be utilized when mounting the battery pack 1000 on a device. As an example, when mounting the battery pack 1000 on a vehicle device, the mounting beam 1300M may be fixed to the chassis of the vehicle.

Further, the battery pack 1000 according to this embodiment may include a vertical beam 1800 that is located on a bottom frame 1200 and partitions a space where the battery cells 110 are located. As an example, FIGS. 2 and 3 illustrate three vertical beams 1800 that partitions the storage space where six battery assemblies 100 are placed into three zones.

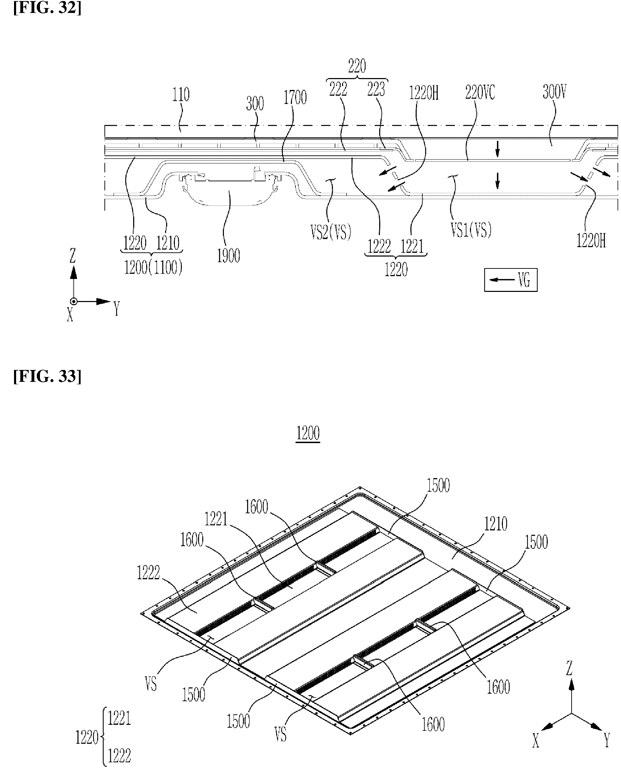

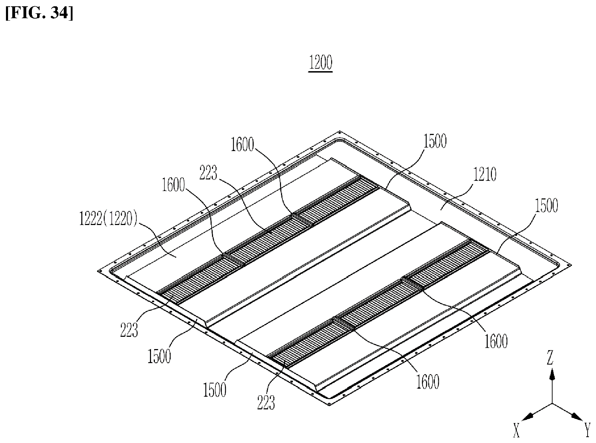

FIG. 30 is a perspective view showing the pack frame and battery assemblies according to an embodiment of the present disclosure. FIG. 31 is a cross-sectional view showing the cross section taken along the cutting line D-D of FIG. 30. FIG. 32 is a partially enlarged diagram of the part "E" of FIG. 31. FIG. 33 is a perspective view showing a bottom frame according to an embodiment of the present disclosure. FIG. 34 is a perspective view showing a state in which vent plates are arranged in the bottom frame of FIG. 33. That is, illustration of other parts of the battery assembly are omitted, and only the state in which the vent plate 223 of the battery assembly is arranged on the bottom frame 1200 is illustrated in FIG. 34.

Referring to FIGS. 24, 25, and 30 to 34, the bottom frame 1200 is provided with a venting space VS through which venting gas, particles, and the like discharged from the cell vent part 300V move. The cell vent part 300V of the cell frame 300 may be located to correspond to the venting space VS of the bottom frame 1200. Specifically, the cell vent part 300V of the cell frame 300 may be communicated with the venting space VS of the bottom frame 1200. More specifically, while venting gas is discharged from the battery cell 110 due to thermal runaway in the battery cell 110, the cell vent part 300V may be communicated with the venting space VS of the bottom frame 1200. Thereby, the venting gas can move from the cell vent part 300V to the venting space VS of the bottom frame 1200.

Due to the cell vent cover part 220VC that covers the lower part of the cell vent part 300V of the cell frame 300, the cell vent part 300V and the venting space VS of the bottom frame 1200 may be in a state of being not communicated with each other in a normal time. However, after the vent cover part 220VC is opened due to the venting gas discharged through the cell vent part 300V, the venting gas can move from the cell vent part 300V to the venting space VS of the bottom frame 1200 while the cell vent part 300V and the venting space VS of the bottom frame 1200 are communicated with each other.

The cell vent part 300V may be configured to protrude in the direction where the bottom frame 1200 is located, and be inserted toward the venting space VS inside the bottom frame 1200. In addition, the part where the vent cover part 220VC is formed may be configured to protrude in the direction where the bottom frame 1200 is located, and be inserted toward the venting space VS inside the bottom frame 1200. This makes it possible to prevent the venting gas VG from leaking to other locations when the vent cover part 220VC is opened, and thus guide to allow all venting gases VG to move to the venting space VS of the bottom frame 1200.

The high-temperature venting gas and particles flowing into the venting space VS can be discharged to the outside of the battery pack 1000. The venting gas and particles may flow along the venting space VS provided inside the bottom frame 1200 and ultimately be discharged to the outside of the battery pack 1000. The battery pack 1000 according to this embodiment has a so-called "bottom vent" structure that discharges high-temperature venting gas, particles or the like to the outside using the bottom frame 1200. If high-temperature gas, particles or the like due to the thermal event of the battery cell 110 touch a high-voltage path such as an HV connection, a short circuit or arc discharge may occur, which may lead to additional explosion and flame generation. On the other hand, in the case of the battery pack 1000 according to this embodiment, since it has a "bottom vent" structure as mentioned above, high-temperature gas or particles due to the thermal event may be discharged in the downward direction, i.e., to the bottom frame 1200. Therefore, there is no risk that high-temperature gas, particles or the like may touch a high-voltage path such as an HV connection, ultimately improving safety against thermal runaway phenomena.

As an example, the detailed structure of the bottom frame 1200 will be described in detail below.

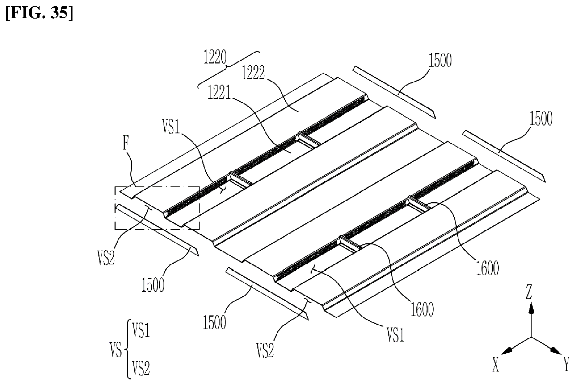

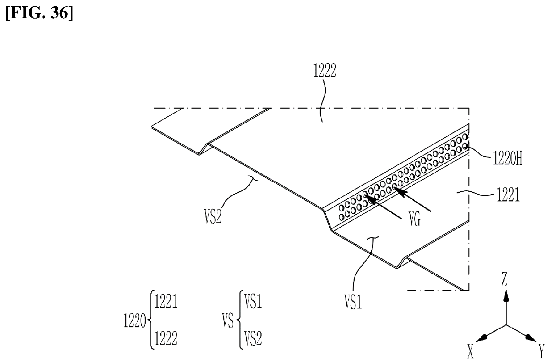

FIG. 35 is a perspective view showing an inner frame and cover plates according to an embodiment of the present disclosure. FIG. 36 is a partially enlarged diagram of the part "F" of FIG. 35.

Referring to FIGS. 30 to 36 together, the bottom frame 1200 according to an embodiment of the present disclosure may include an outer frame 1210 and an inner frame 1220. As an example of the present disclosure, the venting space VS may be provided by the outer frame 1210 and the inner frame 1220 of the bottom frame 1200. The outer frame 1210 may be a plate located at the lowermost end of the battery pack 1000, and the outer frame 1210 may be coupled with the side surface frame 1300. The outer frame 1210 may be located below the inner frame 1220. A battery assembly 100 may be placed on the inner frame 1220.

The venting space VS according to this embodiment may be provided in a plurality. The venting gas generated in the battery cell 110 may pass through the plurality of venting spaces VS in sequence. While the venting gas sequentially flows through the plurality of venting spaces VS, the temperature of the venting gas and the particles contained therein may be lowered, and the particles contained in the venting gas may be filtered out. Ultimately, the venting gas and the particles may be prevented from causing an explosion inside the battery pack 1000.

The venting space VS according to an embodiment of the present disclosure may include a first venting space VS1 and a second venting space VS2. The first venting space VS1 and the second venting space VS2 may be partitioned by a portion of the inner frame 1220 in which the filtration holes 1220H are formed.

The position and arrangement relation of the first venting space VS1 and the second venting space VS2 in the bottom frame 1200 are not particularly limited. For example, the first venting space VS1 and the second venting space VS2 may be arranged along a direction parallel to one surface of the bottom frame 1200. The first venting space VS1 and the second venting space VS2 may be arranged along a direction parallel to one surface of the outer frame 1210 among the bottom frame 1200. FIGS. 30 to 36 shows an example in which the first venting space VS1 and the second venting space VS2 are arranged along a direction parallel to the Y-axis. Although not specifically shown in the figure, as another example, the first venting space and the second venting space may be arranged along a direction perpendicular to one surface of the bottom frame 1200. That is, the first venting space and the second venting space can be arranged to have a layered structure along the height direction perpendicular to one surface of the bottom frame 1200, and the venting gas can sequentially move through the first venting space and the second venting space of the layered structure.

The inner frame 1220 is a plate-shaped member, but may include a concave part 1221 and a convex part 1222. In the inner frame 1220, the concave part 1221 and the convex part 1222 may be alternately arranged along the Y-axis direction. Meanwhile, in order to form a venting space VS, a cover plate 1500 or the like may be coupled to both side surface parts of the inner frame 1220. The inner frame 1220 and the cover plate 1500 may be coupled by a method such as welding.

As an example of the present disclosure, the venting space VS may include a first venting space VS1 provided in a concave part 1221 and a second venting space VS2 provided in a convex part 1222. The first venting space VS1 and the second venting space VS2 can be realized by the concave part 1221 and the convex part 1222 of the inner frame 1220. For example, the portion where the concave part 1221 of the inner frame 1220 is surrounded by the cover plate 1500 and the vent plate 223 of the battery assembly 100 can correspond to the first venting space VS1. That is, while the vent cover part 220VC is opened, the venting gas discharged from the cell vent part 300V can move to the first venting space VS1.

Additionally, a portion where the convex part 1222 of the inner frame 1220 is surrounded by the cover plate 1500 may correspond to the second venting space. Further, the inner frame 1220 may include a filtration hole 1220H that communicate the first venting space VS1 and the second venting space VS2. The number of the filtration holes 1220H may be plural. As depicted in FIGS. 32 and 36, the venting gas VG flowing into the first venting space VS1 can move to the second venting space VS2 through the filtration holes 1220H. Particles, ash, by-products, or the like contained in the high-temperature venting gas VG can be primarily filtered out while passing through the filtration hole 1220H. That is, in the case of the bottom frame 1200 according to this embodiment, the venting space VS is divided into a first venting space VS1 and a second venting space VS2, and the first venting space VS1 and the second venting space VS2 are connected through the filtration hole 1220H, thereby exhibiting the function of primarily filtering the high-temperature venting gas VG.

As described above, the cell vent part 300V and the vent cover part 220VC may each be configured to protrude in a direction in which the bottom frame 1200 is located and be inserted toward the venting space VS within the bottom frame 1200. In particular, the cell vent part 300V and the vent cover part 220VC may be configured to be inserted toward the first venting space VS1.

Meanwhile, a gas shield 1600 may be arranged in the concave part 1221 of the inner frame 1220. Specifically, in the adjacent battery assemblies 100 along the X-axis direction, a gas shield 1600 may be arranged in the concave part 1221 in order to separate the first venting space VS1 located below one battery assembly 100 from the first venting space VS 1 located below the other battery assembly 100. According to this gas shield 1600, The venting gas discharged from any one battery assembly 100 to the first vent space VS1 can be blocked from moving to the first vent space VS1 located below the adjacent battery assembly 100 and then flowing back in. That is, the gas shield 1600 according to this embodiment may correspond to a member that independently separates the first venting space VS1 so that each battery assembly 100 has an independent first venting space VS1. Finally, since the first venting spaces VS1 are separated to correspond to each of the battery assemblies 100, thermal runaway propagation between the battery assemblies 100 is minimized, and explosion and structural collapse of the battery pack can be prevented. The gas shield 1600 may be located at a position corresponding to the vertical beam 1800 described above.

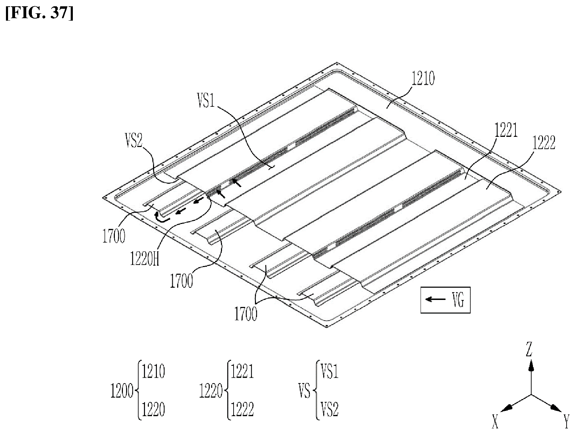

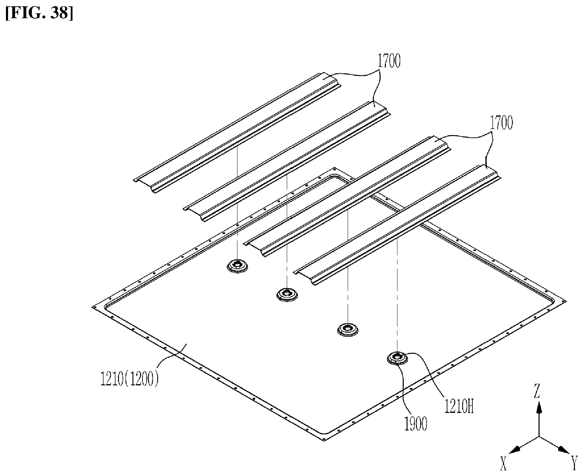

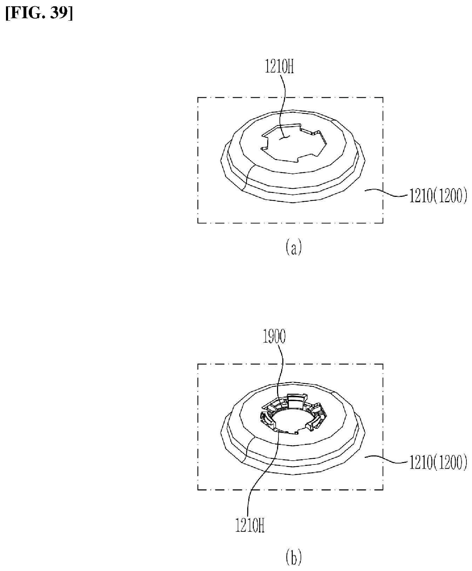

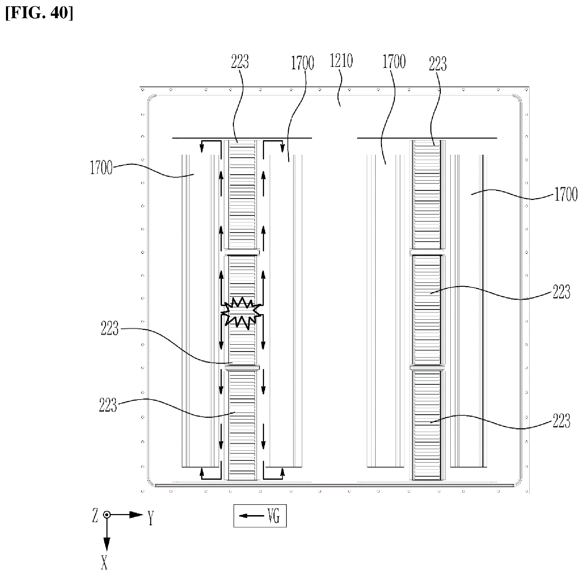

FIG. 37 is a perspective view showing a state in which a part of the inner frame is removed in a bottom frame according to an embodiment of the present disclosure. FIG. 38 is a perspective view showing an outer frame and routing plates according to an embodiment of the present disclosure. FIG. 39(a) is a partial diagram showing an outer frame hole, and FIG. 39(b) is a partial diagram showing a state in which a venting device is coupled to the outer frame hole. FIG. 40 is a plan view showing a state in which the whole of the inner frame is removed in a bottom frame according to an embodiment of the present disclosure. Specifically, except for the inner frame among the bottom frame, the outer frame 1210, the routing plate 1700, and the vent plate 223 are depicted in FIG. 40.

Referring to FIGS. 31, 32, and 37 to 40 together, a venting flow path bent a plurality of times may be formed inside the convex part 1222. Further, the battery pack 1000 may include a venting device 1900 provided in the pack frame 1100. The venting device 1900 may be provided inside the convex part 1222. The venting device 1900 may be located on the lower surface of the bottom frame 1200. The venting device 1900 may be located on the lower surface of the outer frame 1210. The venting gas VG flowing along the venting space VS may be finally discharged to the outside of the battery pack 1000 via the venting device 1900. As an example, the outer frame 1210 may be formed with an outer frame hole 1210H, and a venting device 1900 may be mounted on such an outer frame hole 1210H. The venting device 1900 collectively refers to a member or mechanism that is provided to discharge venting gas, etc. As an example, the venting device 1900 may be a valve structure that is opened or ruptured at the prescribed internal pressure or higher.

The venting device 1900 may be located on the lower surface of the bottom frame 1200. Since the venting device 1900 is located on the lower surface of the bottom frame 1200, the venting gas may be discharged in a downward direction of the battery pack 1000. The battery pack 1000 according to this embodiment may be mounted on a vehicle device, however, the venting device 1900 is located on the lower surface of the bottom frame 1200 as described above, so that the venting gas may be discharged in a downward direction without affecting the vehicle driver and vehicle components. Therefore, it is possible to prevent the venting gas from causing additional thermal events in the vehicle.

The venting gas discharged from the battery cell 110 can move to the venting space VS of the bottom frame 1200 through the cell vent part 300V of the cell frame 300. For example, the venting gas discharged from the battery cell 110 may pass through the cell vent part 300V and the vent plate 223 and move to the first venting space VS1. The venting gas VG flowing into the first venting space VS1 may move to the second venting space VS2 through the filtration hole 1220H of the inner frame 1220. The venting gas that has moved to the second venting space VS2 can be discharged to the outside of the battery pack 1000 through the venting device 1900 provided in the second venting space VS2.

For example, in the second venting space VS2, which is the internal space of the convex part 1222, the venting gas VG can flow along the venting path bent a plurality of times and then be discharged through the venting device 1900. The structure for realizing the venting path bent plural parts is not particularly limited. While the venting gas VG flows along the venting path that is lengthened while being bent a plurality of times, the temperature of the venting gas VG or particle can be lowered. Therefore, the venting gas VG or particle can be prevented from triggering an explosion.

Next, an exemplary structure forming a venting flow path bent a plurality of times is described.

A routing plate 1700 may be located inside the convex part 1222 of the inner frame 1220, i.e., in the second venting space VS2. The routing plate 1700 may have a structure that has an inner space and also extends along one direction (a direction parallel to the X-axis). The outer frame hole 1210H and the venting device 1900 may be located in the internal space of the routing plate 1700.

The venting gas discharged from the battery cell 110 can move to the venting space VS of the bottom frame 1200 through the cell vent part 300V of the cell frame 300. For example, the venting gas discharged from the battery cell 110 can move to the first venting space VS1 through the cell vent part 300V and the vent plate 223. The venting gas VG flowing into the first venting space VS1 through the vent plate 223 can be flowed into the second venting space VS2 through the filtration hole 1220H. The venting gas VG flowing into the second venting space VS2 through the filtration hole 1220H can move from the external space of the routing plate 1700 in the second venting space VS2 to the internal space of the routing plate 1700 in the second venting space VS2. For example, the venting gas VG can be bent a plurality of times while moving to the internal space of the routing plate 1700, as shown in FIGS. 37 and 40.

As the routing plate 1700 is provided inside the second venting space VS2 in this manner, the venting gas VG and particles flowing into the second venting space VS2 move along a lengthened venting flow path, and the path is bent a plurality of times along the path. While the venting gas VG flows along the path lengthened by the routing plate 1700, the temperature of the venting gas VG or particle may be lowered. Therefore, it is possible to prevent the venting gas VG or particle from triggering an explosion. Furthermore, as the path of the venting gas VG is lengthened, oxygen flowing in from the outside of the battery pack 1000 may be blocked from encountering the venting gas or the like, thereby preventing an explosion. In addition, large particles may be filtered out in the lengthened path.

Meanwhile, the external space of the routing plate 1700 among the second venting spaces VS2 may be communicated with each other. For example, the height of the routing plate 1700 may be lower than the height of the convex part 1222 of the inner frame 1220. Thereby, the two zones of the second venting space VS2 located on both sides of the routing plate 1700 can communicate with each other.

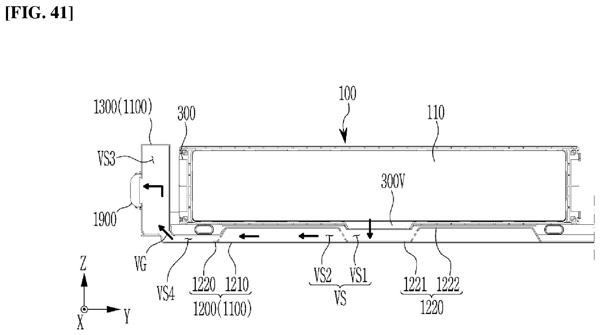

FIG. 41 is a partial cross-sectional view showing a part of a cross section of a battery pack according to a modified embodiment of the present disclosure.

Referring to FIG. 41, the side surface frame 1300 may be provided with a side venting space VS3 that is communicated with the venting space VS. The venting gas VG flowing into the venting space VS of the bottom frame 1200 may flow along the venting space VS, move to the side venting space VS3 inside the side surface frame 1300, and finally be discharged to the outside of the battery pack 1000. A side venting space VS3 may be provided inside the side surface frame 1300 of the pack frame 1100, and the side venting space VS3 may be communicated with the venting space VS of the bottom frame 1200.

Additionally, a venting device 1900 may be provided on the outer surface of the side surface frame 1300, and the venting device 1900 may be connected to the side venting space VS3. Thereby, the venting gas VG of the side venting space VS3 may be discharged to the outside of the battery pack through the venting device 1900.

For example, the venting space VS of the bottom frame 1200 may include a first venting space VS1 and a second venting space VS2. The description of the first venting space VS1 and the second venting space VS2 will be omitted as they overlap with the contents set forth above. The second venting space VS2 may be communicated with the side venting space VS3 inside the side surface frame 1300. If necessary, the pack frame 1100 may be provided with a connecting venting space VS4 that connects the venting space VS of the bottom frame 1200 and the side venting space VS3 of the side surface frame 1300. The connecting venting space VS4 may be communicated with the second venting space VS2.

As an example, the venting gas VG discharged from the battery cell 110 may move to the venting space VS of the bottom frame 1200 through the cell vent part 300V of the cell frame 300. For example, the venting gas VG discharged from the battery cell 110 may move to the first venting space VS1 through the cell vent part 300V. The venting gas VG flowing into the first venting space VS1 may be flowed into the second venting space VS2 through the filtration hole 1220H (see FIG. 36). The venting gas VG flowing into the second venting space VS2 can move to the side venting space VS3 inside the side surface frame 1300. As described above, the venting gas VG may move to the side venting space VS3 through the connecting venting space VS4 provided as necessary. The venting gas VG flowing into the side venting space VS3 may be discharged to the outside of the battery pack through the venting device 1900.

The terms representing directions such as the front side, the rear side, the left side, the right side, the upper side, and the lower side have been used in the present embodiment, but the terms used are provided simply for convenience of description and may become different according to the position of an object, the position of an observer, or the like.

One or more battery assemblies according to the present embodiment described above may be mounted together with various control and protection systems such as a battery management system (BMS), a battery disconnect unit (BDU), and a cooling system to form a battery pack.

The battery assembly or the battery pack may be applied to various devices. Specifically, it can be applied to transportation vehicles such as an electric bike, an electric vehicle, and a hybrid electric vehicle, or an ESS (Energy Storage System) and may be applied to various devices capable of using secondary batteries, without being limited thereto.

Although the invention has been described in detail with reference to preferred embodiments thereof, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

100: battery assembly
110: battery cell
200: cell assembly frame
300: cell frame
300V: cell vent part
400: heat sink
410: cooling plate
500: pad member
1000: battery pack
1100: pack frame
1200: bottom frame
1300: side surface frame
1400: pack cover

## Claims

1. A battery pack comprising:
at least one battery assembly including a plurality of battery cells; and
a pack frame that stores the at least one battery assembly,
wherein the pack frame includes a bottom frame on which the battery assembly is placed and in which a venting space is provided,
wherein the battery assembly includes battery cells stacked along one direction, and cell frames that extends along edges of the battery cells and covers the edges of the battery cells, and
wherein a cell vent part is formed in the part that faces the bottom frame among the cell frames.

2. The battery pack according to claim 1, wherein:
the cell vent part is located so as to correspond to the venting space.

3. The battery pack according to claim 1, wherein:
the cell frames include a first frame that covers the lower end part of the battery cell; a second frame that covers the upper end part of the battery cell; and third and fourth frames that cover both end parts between the lower end part and the upper end part of the battery cell, respectively,
wherein the cell vent part is formed in the first frame.

4. The battery pack according to claim 1, wherein:
the cell frame is provided for each of the battery cells, so that the battery cells and the cell frame correspond to each other one-to-one.

5. The battery pack according to claim 1, wherein:
while the venting gas is discharged from the battery cell, the cell vent part is communicated with the venting space of the bottom frame.

6. The battery pack according to claim 1, wherein:
the cell vent part is configured to protrude in the direction in which the bottom frame is located and be inserted into the venting space inside the bottom frame.

7. The battery pack according to claim 1, wherein:
the battery assembly includes a cell assembly frame that stores the battery cells, and
the cell assembly frame includes an upper frame that covers the upper part of the battery cells; and a lower frame that covers the lower part of the battery cells.

8. The battery pack according to claim 1, wherein:
a vent cover part that is opened at a prescribed pressure or higher is located below the cell vent part.

9. The battery pack according to claim 8, wherein:
the vent cover part covers the cell vent part.

10. The battery pack according to claim 8, wherein:
the vent cover part is configurated to protrude in a direction where the bottom frame is located and be inserted toward the venting space of the bottom frame.

11. The battery pack according to claim 1, wherein:
the bottom frame includes an outer frame and an inner frame,
the outer frame is located below the inner frame, and
the venting space is provided by the outer frame and the inner frame.

12. The battery pack according to claim 11, wherein:
the venting space is provided in a plurality, and
the venting gas generated in the battery cell passes through the venting spaces in sequence.

13. The battery pack according to claim 11, wherein:
the inner frame includes a concave part and a convex part,
the venting space includes a first venting space provided in the concave part and a second venting space provided in the convex part, and
the inner frame is formed with a filtration hole that connects the first venting space and the second venting space.

14. The battery pack according to claim 13, wherein:
a venting flow path bent a plurality of times is formed inside the convex part.

15. The battery pack according to claim 13, wherein:
a venting device that is opened or ruptured at a prescribed pressure or higher is provided inside the convex part.

16. The battery pack according to claim 1,
comprising a heat sink having at least one cooling plate that is arranged at least at one place between the battery cells.

17. The battery pack according to claim 16, wherein:
a coolant flows inside the cooling plate.

18. The battery pack according to claim 16, wherein:
the battery cells and the cooling plate are in surface-contact with each other.

19. The battery pack according to claim 1,
comprising at least one pad member that is arranged at least at one place between the battery cells.

20. The battery pack according to claim 1, wherein:
the pack frame includes a side surface frame that extends along the edge of the bottom frame,
the side surface frame is provided with a side venting space which is communicated with the venting space, and
the venting gas flowing into the venting space of the bottom frame moves to the side venting space.

21. A device comprising a battery pack according to claim 1.
